# EUROPEAN PATENT APPLICATION

(11) **EP 4 593 391 A1**
(43) Date of publication of application: **30.07.2025**
(21) Application number: 23868611.7
(22) Date of filing: 21.09.2023
(51) Int. Cl.: H04N 19/70, H04N 19/184, H04N 19/423, H04N 19/30, G06T 9/00

(54) **IMAGE ENCODING/DECODING METHOD AND DEVICE BASED ON HIGH-LEVEL SYNTAX FOR DEFINING PROFILE, AND RECORDING MEDIUM ON WHICH BITSTREAM IS STORED**

(30) Priority: 23.09.2022 KR 20220120503
(71) Applicant: LG Electronics Inc., Yeongdeungpo-gu Seoul 07336 (KR)
(72) Inventor: KIM, Chulkeun, Seoul 06772 (KR); LIM, Jaehyun, Seoul 06772 (KR); GWAK, Donggyu, Seoul 06772 (KR)
(74) Representative: Maikowski & Ninnemann Patentanwälte Partnerschaft mbB
(86) International application number: PCT/KR2023/014377
(87) International publication number: WO 2024/063559

(57) **Abstract**

The present application discloses image encoding/decoding method and apparatus based on high level syntax defining profile, and recording medium having bitstream stored therein. The image decoding method according to an embodiment of the present disclosure comprises obtaining profile tier level (PTL) information of an image and determining a profile and a tier of the image based on the PTL information, wherein the PTL information includes a profile indicator indicating a type of the profile for the image, wherein the profile type includes a basic profile or an expanded profile, and wherein the expanded profile includes a neural network (NN)-based profile and a machine analysis-based profile.

## Description

### TECHNICAL FIELD

The present disclosure related to an image encoding/decoding method and apparatus based on a high-level syntax defining a profile, and a recording medium storing a bitstream, and more particularly, to an image encoding/decoding technology based on high-level syntax signaling for extension and change of a profile tier level.

### BACKGROUND ART

With the development of machine learning technology, demand for image processing-based artificial intelligence services is increasing. In order to effectively process a vast amount of image data required for artificial intelligence services within limited resources, image compression technology optimized for machine task performance is essential. However, existing image compression technology has been developed with the goal of high-resolution, high-quality image processing for human vision, and has the problem of being unsuitable for artificial intelligence services. Accordingly, research and development on new machine-oriented image compression technology suitable for artificial intelligence services is actively underway.

### DISCLOSURE

### TECHNICAL PROBLEM

An object of the present disclosure is to provide an image encoding/decoding method and apparatus with improved encoding/decoding efficiency.

Another object of the present disclosure is to provide an image encoding/decoding method and apparatus based on a high-level syntax defining a profile, and a recording medium storing a bitstream.

Another object of the present disclosure is to provide an image encoding/decoding method and apparatus based on a profile that is distinguished and defined according to a specific criterion.

Another object of the present disclosure is to provide an image encoding/decoding method and apparatus based on a profile that is distinguished based on a propose, a use and the like.

Another object of the present disclosure is to provide an image encoding/decoding method and apparatus based on a profile including a machine analysis-based on profile and a neural network-based profile.

Another object of the present disclosure is to provide an image encoding/decoding method and apparatus based on a profile including a coding tool.

Another object of the present disclosure is to provide a method for transmitting a bitstream that is generated by an image encoding method or apparatus.

Another object of the present disclosure is to provide a recording medium for storing a bitstream that is generated by an image encoding method or apparatus according to the present disclosure.

Another object of the present disclosure is to provide a recording medium for storing a bitstream that is received and decoded by an image decoding apparatus according to the present disclosure and is used to reconstruct an image.

The technical problems solved by the present disclosure are not limited to the above technical problems and other technical problems which are not described herein will be clearly understood by a person having ordinary skill in the technical field, to which the present disclosure belongs, from the following description.

### TECHINCAL SOLUTION

An image decoding method performed by an image decoding apparatus according to an aspect of the present disclosure may comprise obtaining profile tier level (PTL) information of an image and determining a profile and a tier of the image based on the PTL information, wherein the PTL information includes a profile indicator indicating a type of the profile for the image, wherein the profile type includes a basic profile or an expanded profile, and wherein the expanded profile includes a neural network (NN)-based profile and a machine analysis-based profile.

An image encoding method performed by an image encoding apparatus according to an aspect of the present disclosure may comprise determining profile tier level (PTL) information of an image; and encoding the PTL as PTL information of the image, wherein the PTL information includes a profile indicator indicating a type of the profile for the image, wherein the profile type includes a basic profile or an expanded profile, and wherein the expanded profile includes a neural network (NN)-based profile and a machine analysis-based profile.

A method for transmitting a bitstream for an image according to an aspect of the present disclosure may comprise determining profile tier level (PTL) information of an image and encoding the PTL as PTL information of the image, wherein the PTL information includes a profile indicator indicating a type of the profile for the image, wherein the profile type includes a basic profile or an expanded profile, and wherein the expanded profile includes a neural network (NN)-based profile and a machine analysis-based profile.

A recording medium according to another aspect of the present disclosure may store a bitstream generated by the image encoding method or the image encoding apparatus of the present disclosure.

A bitstream transmission method according to another aspect of the present disclosure may transmit a bitstream generated by the image encoding method or the image encoding apparatus of the present disclosure to an image decoding apparatus.

The features briefly summarized above with respect to the present disclosure are provided as an example only to explain the detailed description and are not construed to limit the scope of the present disclosure.

### ADVANTAGEOUS EFFECTS

According to the present disclosure, it is possible to provide an image information encoding/decoding method and apparatus with improved encoding/decoding efficiency.

Also, according to the present disclosure, it is possible to provide an image encoding/decoding method and apparatus based on a high-level syntax defining a profile.

Also, according to the present disclosure, it is possible to provide an image encoding/decoding method and apparatus with improved coding quality based on a profile that is distinguished and defined according to a specific criterion.

Also, according to the present disclosure, it is possible to provide an image encoding/decoding method and apparatus with improved coding quality based on a profile that is distinguished based on a propose, a use and the like.

Also, according to the present disclosure, it is possible to provide an image encoding/decoding method and apparatus based on a profile including a machine analysis-based on profile and a neural network-based profile.

Also, according to the present disclosure, it is possible to provide an image encoding/decoding method and apparatus based on a profile including a coding tool.

Also, according to the present disclosure, it is possible to provide an image encoding/decoding method and apparatus that defines necessary resource information, which is changeable according to an applied technology, by defining a profile, a tile and a level in consideration of the feature and purpose of a technology applied to coding, thereby becoming suitable for a service purpose and performance of a device.

Also, according to the present disclosure, it is possible to provide an image encoding/decoding method and apparatus that are capable of adaptively encoding/decoding information on a specific coding tool according to an applied profile.

Also, according to the present disclosure, it is possible to provide an image encoding/decoding method and apparatus that improve coding efficiency by encoding/decoding only information on a specific coding tool.

Also, according to the present disclosure, it is possible to provide a recording medium storing a bitstream that is received and decoded by an image decoding apparatus according to the present disclosure and is used to reconstruct an image.

It will be appreciated by persons skilled in the art that that the effects that can be achieved through the present disclosure are not limited to what has been particularly described hereinabove and other advantages of the present disclosure will be more clearly understood from the detailed description.

### BRIEF DESCRIPTION OF THE DRAWINGS

FIG. 1 is a view schematically showing a VCM system to which embodiments of the present disclosure are applicable.
FIG. 2 is a diagram schematically showing a VCM pipeline structure to which embodiments of the present disclosure are applicable.
FIG. 3 is a diagram schematically showing an image/video encoder to which embodiments of the present disclosure are applicable.
FIG. 4 is a diagram schematically showing an image/video decoder to which embodiments of the present disclosure are applicable.
FIG. 5 is a flowchart schematically illustrating a feature/feature map encoding procedure to which embodiments of the present disclosure are applicable.
FIG. 6 is a flowchart schematically illustrating a feature/feature map decoding procedure to which embodiments of the present disclosure are applicable.
FIG. 7 is a view showing an example of a feature extraction and reconstruction method to which embodiments of the present disclosure are applicable.
FIG. 8 is a view showing an example of an image partitioning method to which embodiments of the present disclosure are applicable.
FIGS. 9 and 10 are views showing an example of an image encoding/decoding system including a VCM image encoder and decoder.
FIG. 11 is a view showing an example of a VCM hierarchical structure.
FIG. 12 is a view showing an example of a VCM bitstream consisting of an encoded abstraction feature and NNAL information.
FIG. 13 is a view showing a tier and a level.
FIG. 14 is a view showing an encoding/decoding process that applies a neural network-based coding tool.
FIG. 15 is a view showing an example of a profile definition structure.
FIG. 16, FIG. 17 and FIG. 18 are views showing an example of a profile definition structure according to an embodiment of the present disclosure.
FIG. 19 is a view showing an example of a profile definition structure.
FIG. 20 is a view showing a profile structure according to an embodiment of the present disclosure.
FIG. 21 is a view showing an image decoding method according to an embodiment of the present disclosure.
FIG. 22 is a view showing an image encoding method according to an embodiment of the present disclosure.
FIG. 23 is a view showing an example of a content streaming system to which embodiments of the present disclosure are applicable.
FIG. 24 is a view showing another example of a content streaming system to which embodiments of the present disclosure are applicable.

### DETAILED DESCRIPTION

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, in case it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

**In** the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

**In** the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

The present disclosure may be applied to a method disclosed in a Versatile Video Coding (VVC) standard and/or a Video Coding for Machines (VCM) standard. In addition, the present disclosure may be applied to a method disclosed in an essential video coding (EVC) standard, AOMedia Video 1 (AV1) standard, 2nd generation of audio video coding standard (AVS2), or a next-generation video/image coding standard (e.g., H.267 or H.268, etc.).

This disclosure provides various embodiments related to video/image coding, and, unless otherwise stated, the embodiments may be performed in combination with each other. In the present disclosure, "video" refers to a set of a series of images according to the passage of time. An "image" may be information generated by artificial intelligence (AI). Input information used in the process of performing a series of tasks by AI, information generated during the information processing process, and the output information may be used as images. In the present disclosure, a "picture" generally refers to a unit representing one image in a specific time period, and a slice/tile is a coding unit constituting a part of a picture in encoding. One picture may be composed of one or more slices/tiles. In addition, a slice/tile may include one or more coding tree units (CTUs). The CTU may be partitioned into one or more CUs. A tile is a rectangular region present in a specific tile row and a specific tile column in a picture, and may be composed of a plurality of CTUs. A tile column may be defined as a rectangular region of CTUs, may have the same height as a picture, and may have a width specified by a syntax element signaled from a bitstream part such as a picture parameter set. A tile row may be defined as a rectangular region of CTUs, may have the same width as a picture, and may have a height specified by a syntax element signaled from a bitstream part such as a picture parameter set. A tile scan is a certain continuous ordering method of CTUs partitioning a picture. Here, CTUs may be sequentially ordered according to a CTU raster scan within a tile, and tiles in a picture may be sequentially ordered according to a raster scan order of tiles of the picture. A slice may contain an integer number of complete tiles, or may contain a continuous integer number of complete CTU rows within one tile of one picture. A slice may be exclusively included in a single NAL unit. One picture may be composed of one or more tile groups. One tile group may include one or more tiles. A brick may indicate a rectangular region of CTU rows within a tile in a picture. One tile may include one or more bricks. The brick may refer to a rectangular region of CTU rows in a tile. One tile may be split into a plurality of bricks, and each brick may include one or more CTU rows belonging to a tile. A tile which is not split into a plurality of bricks may also be treated as a brick.

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In an embodiment, especially when applied to VCM, when there is a picture composed of a set of components having different characteristics and meanings, a pixel/pixel value may represent a pixel/pixel value of a component generated through independent information or combination, synthesis, and analysis of each component. For example, in RGB input, only the pixel/pixel value of R may be represented, only the pixel/pixel value of G may be represented, or only the pixel/pixel value of B may be represented. For example, only the pixel/pixel value of a luma component synthesized using the R, G, and B components may be represented. For example, only the pixel/pixel values of images and information extracted through analysis of R, G, and B components from components may be represented.

In the present disclosure, a "unit" may represent a basic unit of image processing. The unit may include at least one of a specific region of the picture and information related to the region. One unit may include one luma block and two chroma (e.g., Cb and Cr) blocks. The unit may be used interchangeably with terms such as "sample array", "block" or "area" in some cases. In a general case, an M×N block may include samples (or sample arrays) or a set (or array) of transform coefficients of M columns and N rows. In an embodiment, In particular, especially when applied to VCM, the unit may represent a basic unit containing information for performing a specific task.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean "a luma block of a current block" unless explicitly stated as a chroma block. The "chroma block of the current block" may be expressed by including an explicit description of a chroma block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to video/image coding for machines (VCM).

VCM refers to a compression technology that encodes/decodes part of a source image/video or information obtained from the source image/video for the purpose of machine vision. In VCM, the encoding/decoding target may be referred to as a feature. The feature may refer to information extracted from the source image/video based on task purpose, requirements, surrounding environment, etc. The feature may have a different information form from the source image/video, and accordingly, the compression method and expression format of the feature may also be different from those of the video source.

VCM may be applied to a variety of application fields. For example, in a surveillance system that recognizes and tracks objects or people, VCM may be used to store or transmit object recognition information. In addition, in intelligent transportation or smart traffic systems, VCM may be used to transmit vehicle location information collected from GPS, sensing information collected from LIDAR, radar, etc., and various vehicle control information to other vehicles or infrastructure. Additionally, in the smart city field, VCM may be used to perform individual tasks of interconnected sensor nodes or devices.

The present disclosure provides various embodiments of feature/feature map coding. Unless otherwise specified, embodiments of the present disclosure may be implemented individually, or may be implemented in combination of two or more.

### Overview of VCM System

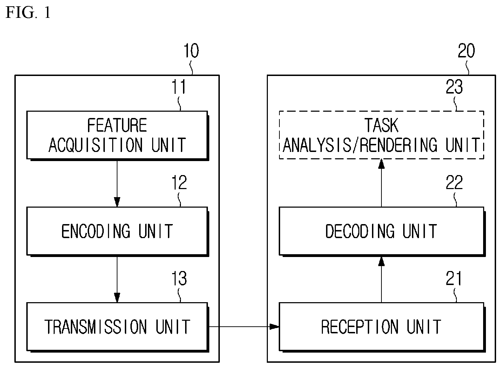

FIG. 1 is a diagram schematically showing a VCM system to which embodiments of the present disclosure are applicable.

Referring to FIG. 1, the VCM system may include an encoding apparatus 10 and a decoding apparatus 20.

The encoding apparatus 10 may compress/encode a feature/feature map extracted from a source image/video to generate a bitstream, and transmit the generated bitstream to the decoding apparatus 20 through a storage medium or network. The encoding apparatus 10 may also be referred to as a feature encoding apparatus. In a VCM system, the feature/feature map may be generated at each hidden layer of a neural network. The size and number of channels of the generated feature map may vary depending on the type of neural network or the location of the hidden layer. In the present disclosure, a feature map may be referred to as a feature set, and a feature or feature map may be referred to as 'feature information'.

The encoding apparatus 10 may include a feature acquisition unit 11, an encoding unit 12, and a transmission unit 13.

The feature acquisition unit 11 may acquire a feature/feature map for the source image/video. Depending on the embodiment, the feature acquisition unit 11 may acquire a feature/feature map from an external device, for example, a feature extraction network. In this case, the feature acquisition unit 11 performs a feature reception interface function. Alternatively, the feature acquisition unit 11 may acquire a feature/feature map by executing a neural network (e.g., CNN, DNN, etc.) using the source image/video as input. In this case, the feature acquisition unit 11 performs a feature extraction network function.

Depending on the embodiment, the encoding apparatus 10 may further include a source image generator (not shown) for acquiring the source image/video. The source image generator may be implemented with an image sensor, a camera module, etc., and may acquire the source image/video through an image/video capture, synthesis, or generation process. In this case, the generated source image/video may be sent to the feature extraction network and used as input data for extracting the feature/feature map.

The encoding unit 12 may encode the feature/feature map acquired by the feature acquisition unit 11. The encoding unit 12 may perform a series of procedures such as prediction, transform, and quantization to increase encoding efficiency. The encoded data (encoded feature/feature map information) may be output in the form of a bitstream. The bitstream containing the encoded feature/feature map information may be referred to as a VCM bitstream.

The transmission unit 13 may obtain feature/feature map information or data output in the form of a bitstream form and forward the feature/feature map information or data to the decoding apparatus 20 or another external object through a digital storage medium or network in the form of a file or streaming. Here, digital storage media may include various storage media such as USB, SD, CD, DVD, Blu-ray, HDD, and SSD. The transmission unit 13 may include elements for generating a media file with a predetermined file format or elements for transmitting data through a broadcasting/communication network. The transmission unit 13 may be provided as a separate transmission device from the encoding unit 12, and in this case, the transmission device may include at least one processor for obtaining feature/feature map information or data output in the form of a bitstream and a transmission unit for forwarding the feature/feature map information in the form of a file or streaming.

The decoding apparatus 20 may acquire feature/feature map information from the encoding apparatus 10 and reconstruct the feature/feature map based on the acquired information.

The decoding apparatus 20 may include a reception unit 21 and a decoding unit 22.

The reception unit 21 may receive a bitstream from the encoding apparatus 10, acquire feature/feature map information from the received bitstream, and send it to the decoding unit 22.

The decoding unit 22 may decode the feature/feature map based on the acquired feature/feature map information. The decoding unit 22 may perform a series of procedures such as dequantization, inverse transform, and prediction corresponding to the operation of the encoding unit 12 to increase decoding efficiency.

Depending on the embodiment, the decoding apparatus 20 may further include a task analysis/rendering unit 23.

The task analysis/rendering unit 23 may perform task analysis based on the decoded feature/feature map. Additionally, the task analysis/rendering unit 23 may render the decoded feature/feature map into a form suitable for task performance. Various machine (oriented) tasks may be performed based on task analysis results and the rendered features/feature map.

As described above, the VCM system may encode/decode the feature extracted from the source image/video according to user and/or machine requests, task purpose, and surrounding environment, and performs various machine (oriented) tasks based on the decoded feature. The VCM system may be implemented by expanding/redesigning the video/image coding system and may perform various encoding/decoding methods defined in the VCM standard.

### VCM pipeline

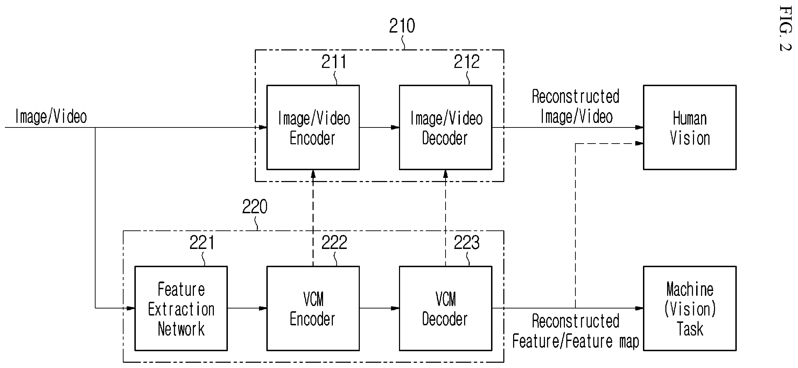

FIG. 2 is a diagram schematically showing a VCM pipeline structure to which embodiments of the present disclosure are applicable.

Referring to FIG. 2, the VCM pipeline 200 may include a first pipeline 210 for encoding/decoding an image/video and a second pipeline 220 for encoding/decoding a feature/feature map. In the present disclosure, the first pipeline 210 may be referred to as a video codec pipeline, and the second pipeline 220 may be referred to as a feature codec pipeline.

The first pipeline 210 may include a first stage 211 for encoding an input image/video and a second stage 212 for decoding the encoded image/video to generate a reconstructed image/video. The reconstructed image/video may be used for human viewing, that is, human vision.

The second pipeline 220 may include a third stage 221 for extracting a feature/feature map from the input image/video, a fourth stage 222 for encoding the extracted feature/feature map, and a fifth stage 223 for decoding the encoded feature/feature map to generate a reconstructed feature/feature map. The reconstructed feature/feature map may be used for a machine (vision) task. Here, the machine (vision) task may refer to a task in which images/videos are consumed by a machine. The machine (vision) task may be applied to service scenarios such as, for example, Surveillance, Intelligent Transportation, Smart City, Intelligent Industry, Intelligent Content, etc. Depending on the embodiment, the reconstructed feature/feature map may be used for human vision.

Depending on the embodiment, the feature/feature map encoded in the fourth stage 222 may be transferred to the first stage 221 and used to encode the image/video. In this case, an additional bitstream may be generated based on the encoded feature/feature map, and the generated additional bitstream may be transferred to the second stage 222 and used to decode the image/video.

Depending on the embodiment, the feature/feature map decoded in the fifth stage 223 may be transferred to the second stage 222 and used to decode the image/video.

FIG. 2 shows a case where the VCM pipeline 200 includes a first pipeline 210 and a second pipeline 220, but this is merely an example and embodiments of the present disclosure are not limited thereto. For example, the VCM pipeline 200 may include only the second pipeline 220, or the second pipeline 220 may be expanded into multiple feature codec pipelines.

Meanwhile, in the first pipeline 210, the first stage 211 may be performed by an image/video encoder, and the second stage 212 may be performed by an image/video decoder. Additionally, in the second pipeline 220, the third stage 221 may be performed by a VCM encoder (or feature/feature map encoder), and the fourth stage 222 may be performed by a VCM decoder (or feature/feature map encoder). Hereinafter, the encoder/decoder structure will be described in detail.

### Encoder

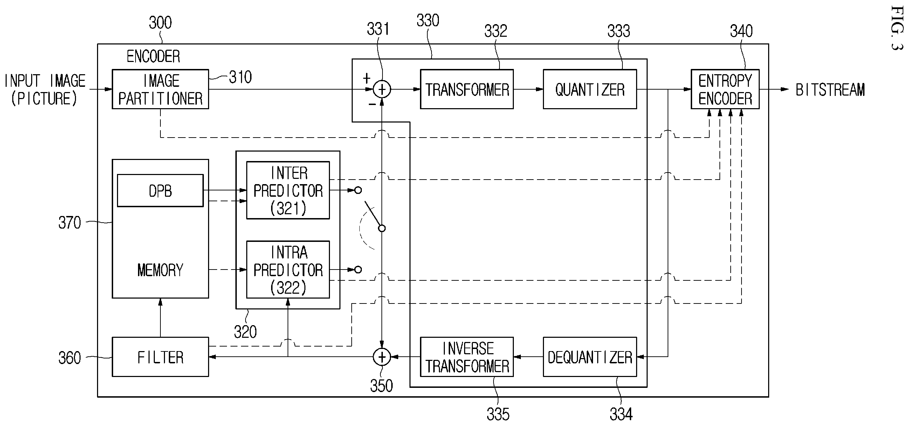

FIG. 3 is a diagram schematically showing an image/video encoder to which embodiments of the present disclosure are applicable.

Referring to FIG. 3, the image/video encoder 300 may further include an image partitioner 310, a predictor 320, a residual processor 330, an entropy encoder 340, and an adder 350, a filter 360, and a memory 370. The predictor 320 may include an inter predictor 321 and an intra predictor 322. The residual processor 330 may include a transformer 332, a quantizer 333, a dequantizer 334, and an inverse transformer 335. The residual processor 330 may further include a subtractor 331. The adder 350 may be referred to as a reconstructor or a reconstructed block generator. The image partitioner 310, the predictor 320, the residual processor 330, the entropy encoder 340, the adder 350, and the filter 360 may be configured by one or more hardware components (e.g., encoder chipset or processor) depending on the embodiment. Additionally, the memory 370 may include a decoded picture buffer (DPB) and may be configured by a digital storage medium. The hardware components described above may further include a memory 370 as an internal/external component.

The image partitioner 310 may partition an input image (or picture, frame) input to the image/video encoder 300 into one or more processing units. As an example, the processing unit may be referred to as a coding unit (CU). The coding unit may be recursively partitioned according to a quad-tree binary-tree ternary-tree (QTBTTT) structure from a coding tree unit (CTU) or largest coding unit (LCU). For example, one coding unit may be partitioned into a plurality of coding units of deeper depth based on a quad tree structure, binary tree structure, and/or ternary structure. In this case, for example, the quad tree structure may be applied first and the binary tree structure and/or ternary structure may be applied later. Alternatively, the binary tree structure may be applied first. The image/video coding procedure according to the present disclosure may be performed based on a final coding unit that is no longer partitioned. In this case, the largest coding unit may be used as the final coding unit based on coding efficiency according to image characteristics, or, if necessary, the coding unit may be recursively partitioned into coding units of deeper depth to use a coding unit with an optimal size as the final coding unit. Here, the coding procedure may include procedures such as prediction, transform, and reconstruction, which will be described later. As another example, the processing unit may further include a prediction unit (PU) or a transform unit (TU). In this case, the prediction unit and the transform unit may each be divided or partitioned from the final coding unit described above. The prediction unit may be a unit of sample prediction, and the transform unit may be a unit for deriving a transform coefficient and/or a unit for deriving a residual signal from the transform coefficient.

In some cases, the unit may be used interchangeably with terms such as block or area. In a general case, an MxN block may represent a set of samples or transform coefficients consisting of M columns and N rows. A sample may generally represent a pixel or a pixel value, and may represent only a pixel/pixel value of a luma component, or only a pixel/pixel value of a chroma component. The sample may be used as a term corresponding to pixel or pel.

The image/video encoder 300 may generate a residual signal (residual block, residual sample array) by subtracting a prediction signal (predicted block, prediction sample array) output from the inter predictor 321 or the intra predictor 322 from the input image signal (original block, original sample array) and transmit the generated residual signal to the transformer 332. In this case, as shown, the unit that subtracts the prediction signal (prediction block, prediction sample array) from the input image signal (original block, original sample array) within the image/video encoder 300 may be referred to as the subtractor 331. The predictor may perform prediction on a processing target block (hereinafter referred to as a current block) and generate a predicted block including prediction samples for the current block. The predictor may determine whether intra prediction or inter prediction is applied in current block or CU units. The predictor may generate various information related to prediction, such as prediction mode information, and transfer it to the entropy encoder 340. Information about prediction may be encoded in the entropy encoder 340 and output in the form of a bitstream.

The intra predictor 322 may predict the current block by referring to the samples in the current picture. At this time, the referenced samples may be located in the neighbor of the current block or may be located away from the current block, depending on the prediction mode. In intra prediction, the prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on settings. The intra predictor 322 may determine the prediction mode applied to the current block by using a prediction mode applied to a neighboring block.

The inter predictor 321 may derive a predicted block for the current block based on a reference block (reference sample array) specified by a motion vector on a reference picture. In this case, in order to reduce the amount of motion information transmitted in the inter prediction mode, the motion information may be predicted in block, subblock, or sample units based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 321 may construct a motion information candidate list based on neighboring blocks and generate information indicating which candidate is used to derive a motion vector and/or reference picture index of the current block. Inter prediction may be performed based on various prediction modes, and, for example, in the case of a skip mode and a merge mode, the inter predictor 321may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and a motion vector difference may be signaled to indicate the motion vector of the current block.

The predictor 320 may generate a prediction signal based on various prediction methods. For example, the predictor may not only apply intra prediction or inter prediction but also simultaneously apply both intra prediction and inter prediction, for prediction of one block. This may be called combined inter and intra prediction (CIIP). In addition, the predictor may be based on an intra block copy (IBC) prediction mode or a palette mode for prediction of the block. The IBC prediction mode or the palette mode may be used for content image/video coding of a game or the like, for example, screen content coding (SCC). IBC basically performs prediction within the current picture, but may be performed similarly to inter prediction in that a reference block is derived within the current picture. That is, IBC may use at least one of the inter prediction techniques described in the present disclosure. The palette mode may be regarded as an example of intra coding or intra prediction. When the palette mode is applied, the sample values within the picture may be signaled based on information about a palette table and a palette index.

The prediction signal generated by the predictor 320 may be used to generate a reconstructed signal or to generate a residual signal. The transformer 332 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT refers to transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to non-square blocks having a variable size.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may reorder quantized transform coefficients in a block form into a one-dimensional vector form based on a coefficient scan order and generate information on the quantized transform coefficients based on the quantized transform coefficients in the one-dimensional vector form. The entropy encoder 340 may perform various encoding methods such as, for example, exponential Golomb, context-adaptive variable length coding (CAVLC), context-adaptive binary arithmetic coding (CABAC), and the like. The entropy encoder 340 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In addition, the video/image information may further include a method of generating and using encoded information, a purpose, and the like. In the present disclosure, information and/or syntax elements transferred/signaled from the image/video encoder to the image/video decoder may be included in image/video information. The image/video information may be encoded through the above-described encoding procedure and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 340 and/or a storage unit (not shown) storing the signal may be configured as internal/external element of the image/video encoder 300, or the transmitter may be included in the entropy encoder 340.

The quantized transform coefficients output from the quantizer 130 may be used to generate a prediction signal. For example, the residual signal (residual block or residual samples) may be reconstructed by applying dequantization and inverse transform to the quantized transform coefficients through the dequantizer 334 and the inverse transformer 335. The adder 350 adds the reconstructed residual signal to the prediction signal output from the inter predictor 321 or the intra predictor 322 to generate a reconstructed signal (reconstructed picture, reconstructed block, reconstructed sample array). In a case where there is no residual for the processing target block, such as a case where the skip mode is applied, the predicted block may be used as the reconstructed block. The adder 350 may be called a reconstructor or a reconstructed block generator. The generated reconstructed signal may be used for intra prediction of a next processing target block in the current picture and may be used for inter prediction of a next picture through filtering as described below.

Meanwhile, luma mapping with chroma scaling (LMCS) is applicable in a picture encoding and/or reconstruction process.

The filter 360 may improve subjective/objective image quality by applying filtering to the reconstructed signal. For example, the filter 360 may generate a modified reconstructed picture by applying various filtering methods to the reconstructed picture, and store the modified reconstructed picture in the memory 370, specifically, a DPB of the memory 370. The various filtering methods may include, for example, deblocking filtering, a sample adaptive offset, an adaptive loop filter, a bilateral filter, and the like. The filter 360 may generate various information related to filtering and transmit the generated information to the entropy encoder 190. The information related to filtering may be encoded by the entropy encoder 340 and output in the form of a bitstream.

The modified reconstructed picture transmitted to the memory 370 may be used as the reference picture in the inter predictor 321. Through this, prediction mismatch between the encoder and the decoder may be avoided and encoding efficiency may be improved.

The DPB of the memory 370 may store the modified reconstructed picture for use as a reference picture in the inter predictor 321. The memory 370 may store the motion information of the block from which the motion information in the current picture is derived (or encoded) and/or the motion information of the blocks in the already reconstructed picture. The stored motion information may be transferred to the inter predictor 321 for use as the motion information of the spatial neighboring block or the motion information of the temporal neighboring block. The memory 370 may store reconstructed samples of reconstructed blocks in the current picture and may transfer the stored reconstructed samples to the intra predictor 322.

Meanwhile, the VCM encoder (or feature/feature map encoder) basically performs a series of procedures such as prediction, transform, and quantization to encode the feature/feature map and thus may basically have the same/similar structure as the image/video encoder 300 described with reference to FIG. 3. However, the VCM encoder is different from the image/video encoder 300 in that the feature/feature map is an encoding target, and thus may be different from the image/video encoder 300 in the name of each unit (or component) (e.g., image partitioner 310, etc.) and its specific operation content. The specific operation of the VCM encoder will be described in detail later.

### Decoder

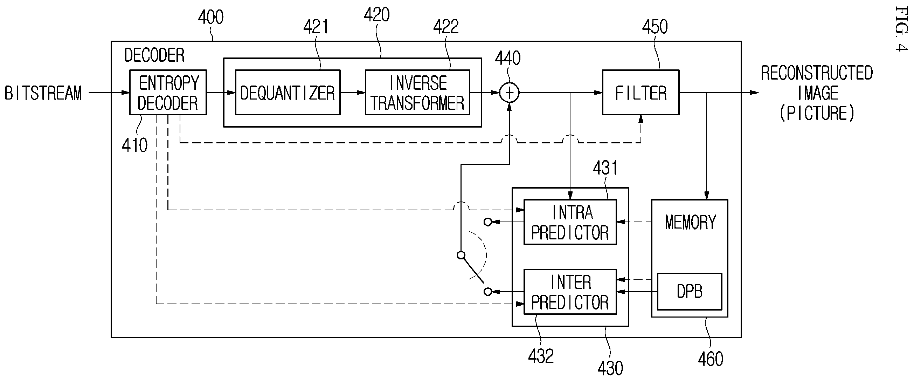

FIG. 4 is a diagram schematically showing an image/video decoder to which embodiments of the present disclosure are applicable.

Referring to FIG. 4, the image/video decoder 400 may include an entropy decoder 410, a residual processor 420, a predictor 430, an adder 440, a filter 450 and a memory 460. The predictor 430 may include an inter predictor 431 and an intra predictor 432. The residual processor 420 may include a dequantizer 421 and an inverse transformer 422. The entropy decoder 410, the residual processor 420, the predictor 430, the adder 440, and the filter 450 may be configured by one hardware component (e.g., a decoder chipset or processor) depending on the embodiment. Additionally, the memory 460 may include a decoded picture buffer (DPB) and may be configured by a digital storage medium. The hardware component may further include the memory 460 as an internal/external component.

When a bitstream containing video/image information is input, the image/video decoder 400 may reconstruct an image/video in correspondence with the process in which the image/video information is processed in the image/video encoder 300 of FIG. 3. For example, the image/video decoder 400 may derive units/blocks based on block partition-related information acquired from the bitstream. The image/video decoder 400 may perform decoding using a processing unit applied in the image/video encoder. Accordingly, the processing unit of decoding may, for example, be a coding unit, and the coding unit may be partitioned from a coding tree unit or a largest coding unit according to a quad tree structure, a binary tree structure and/or a ternary tree structure. One or more transform units may be derived from the coding unit. In addition, the reconstructed image signal decoded and output through the image/video decoder 400 may be played through a playback device.

The image/video decoder 400 may receive a signal output from the encoder of FIG. 3 in the form of a bitstream, and decode the received signal through the entropy decoder 410. For example, the entropy decoder 410 may parse the bitstream to derive information (e.g., image/video information) necessary for image reconstruction (or picture reconstruction). The image/video information may further include information about various parameter sets, such as an adaptation parameter set (APS), picture parameter set (PPS), sequence parameter set (SPS), or video parameter set (VPS). Additionally, image/video information may further include general constraint information. Additionally, the image/video information may include a method of generating and using decoded information, a purpose, and the like. The image/video decoder 400 may decode the picture further based on information about the parameter set and/or general constraint information. The signaled/received information and/or syntax elements may be decoded and acquired from the bitstream through a decoding procedure. For example, the entropy decoder 410 may decode information in the bitstream based on a coding method such as exponential Golomb coding, CAVLC, or CABAC, and output the values of syntax elements necessary for image reconstruction and quantized values of transform coefficients related to residuals. More specifically, in the CABAC entropy decoding method, a bin corresponding to each syntax element may be received in the bitstream, a context model may be determined using decoding target syntax element information and decoding information of neighboring and decoding target blocks or information on the symbol/bin decoded in the previous step, the occurrence probability of the bin may be predicted according to the determined context model, and arithmetic decoding of the bin may be performed to generate a symbol corresponding to the value of each syntax element. At this time, the CABAC entropy decoding method may update the context model using the information on the decoded symbol/bin for the context model of the next symbol/bin after determining the context model. Information about prediction among the information decoded in the entropy decoder 410 is provided to the predictor (inter predictor 432 and intra predictor 431), and a residual value obtained by performing entropy decoding in the entropy decoder 410, that is, quantized transform coefficients and related parameter information may be input to the residual processor 420. The residual processor 420 may derive a residual signal (residual block, residual samples, residual sample array). Additionally, information about filtering among the information decoded by the entropy decoder 410 may be provided to the filter 450. Meanwhile, a receiver (not shown) that receives a signal output from the image/video encoder may be further configured as an internal/external element of the image/video decoder 400, or the receiver may be a component of the entropy decoder 410. Meanwhile, the image/video decoder according to the present disclosure may be called an image/video decoding apparatus, and the image/video decoder may be divided into an information decoder (image/video information decoder) and a sample decoder (image/video sample decoder). In this case, the information decoder may include an entropy decoder 410, and the sample decoder may include at least one of a dequantizer 321, an inverse transformer 322, an adder 440, a filter 450, and a memory 460, an inter predictor 432 or an intra predictor 431.

The dequantizer 421 may dequantize the quantized transform coefficients and output transform coefficients. The dequantizer 421 may rearrange the quantized transform coefficients into a two-dimensional block form. In this case, rearranging may be performed based on the coefficient scan order performed in the image/video encoder. The dequantizer 321 may perform dequantization on quantized transform coefficients using quantization parameters (e.g., quantization step size information) and acquire transform coefficients.

The inverse transformer 422 inversely transforms the transform coefficients to acquire a residual signal (residual block, residual sample array).

The predictor 430 may perform prediction on the current block and generate a predicted block including prediction samples for the current block. The predictor may determine whether intra prediction or inter prediction is applied to the current block based on information about prediction output from the entropy decoder 410, and may determine a specific intra/inter prediction mode.

The predictor 420 may generate a prediction signal based on various prediction methods. For example, the predictor may not only apply intra prediction or inter prediction for prediction of one block, but also may apply intra prediction and inter prediction simultaneously. This may be called combined inter and intra prediction (CIIP). Additionally, the predictor may be based on an intra block copy (IBC) prediction mode or a palette mode for prediction of a block. The IBC prediction mode or palette mode may be used, for example, for image/video coding of content such as games, such as screen content coding (SCC). In IBC, prediction is basically performed within the current picture, but may be performed similarly to inter prediction in that a reference block is derived within the current picture. That is, IBC may use at least one of the inter prediction techniques described in this document. The palette mode may be viewed as an example of intra coding or intra prediction. When the palette mode is applied, information about the palette table and palette index may be included and signaled in the image/video information.

The intra predictor 431 may predict the current block by referencing samples in the current picture. The referenced samples may be located in the neighbor of the current block, or may be located away from the current block, depending on the prediction mode. In intra prediction, prediction modes may include a plurality of non-directional modes and a plurality of directional modes. The intra predictor 431 may determine the prediction mode applied to the current block using the prediction mode applied to the neighboring block.

The inter predictor 432 may derive a predicted block for the current block based on a reference block (reference sample array) specified by a motion vector in the reference picture. At this time, in order to reduce the amount of motion information transmitted in the inter prediction mode, motion information may be predicted in block, subblock, or sample units based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, neighboring blocks may include a spatial neighboring block present in the current picture and a temporal neighboring block present in the reference picture. For example, the inter predictor 432 may construct a motion information candidate list based on neighboring blocks and derive a motion vector and/or reference picture index of the current block based on received candidate selection information. Inter prediction may be performed based on various prediction modes, and information about prediction may include information indicating the mode of inter prediction for the current block.

The adder 440 may generate a reconstructed signal (reconstructed picture, reconstructed block, reconstructed sample array) by adding the acquired residual signal to a prediction signal (predicted block, prediction sample array) output from the predictor (including the inter predictor 432 and/or the intra predictor 431). If there is no residual for a processing target block, such as when skip mode is applied, the predicted block may be used as a reconstruction block.

The adder 440 may be called a reconstructor or a reconstruction block generator. The generated reconstructed signal may be used for intra prediction of a next processing target block in the current picture, may be output after filtering as described later, or may be used for inter prediction of a next picture.

Meanwhile, luma mapping with chroma scaling (LMCS) is applicable in a picture decoding process.

The filter 450 can improve subjective/objective image quality by applying filtering to the reconstructed signal. For example, the filter 450 may generate a modified reconstructed picture by applying various filtering methods to the reconstructed picture, and transmit the modified reconstructed picture in the memory 460, specifically the DPB of the memory 460. Various filtering methods may include, for example, deblocking filtering, sample adaptive offset, adaptive loop filter, bilateral filter, etc.

The (modified) reconstructed picture stored in the DPB of the memory 460 may be used as a reference picture in the inter predictor 432. The memory 460 may store motion information of a block from which motion information in the current picture is derived (or decoded) and/or motion information of blocks in an already reconstructed picture. The stored motion information may be transferred to the inter predictor 432 for use as motion information of spatial neighboring blocks or motion information of temporal neighboring blocks. The memory 460 may store reconstructed samples of reconstructed blocks in the current picture and transfer them to the intra predictor 431.

Meanwhile, the VCM decoder (or feature/feature map decoder) performs a series of procedures such as prediction, inverse transform, and dequantization to decode the feature/feature map, and may basically have the same/similar structure as the image/video decoder 400 described above with reference to FIG. 4. However, the VCM decoder is different from the image/video decoder 400 in that the feature/feature map is a decoding target, and may be different from the image/video decoder 400 in the name (e.g., DPB, etc.) of each unit (or component) and its specific operation. The operation of the VCM decoder may correspond to the operation of the VCM encoder, and the specific operation will be described in detail later.

### Feature/feature map encoding procedure

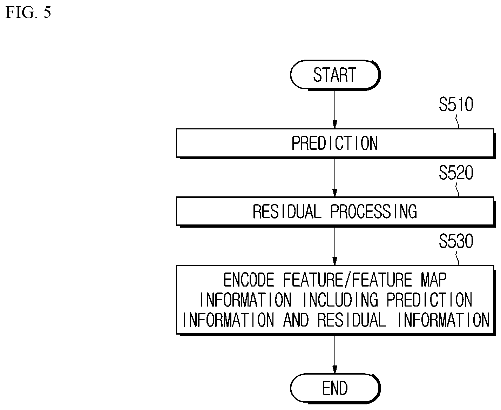

FIG. 5 is a flowchart schematically illustrating a feature/feature map encoding procedure to which embodiments of the present disclosure are applicable.

Referring to FIG. 5, the feature/feature map encoding procedure may include a prediction procedure (S510), a residual processing procedure (S520), and an information encoding procedure (S530).

The prediction procedure (S510) may be performed by the predictor 320 described above with reference to FIG. 3.

Specifically, the intra predictor 322 may predict a current block (that is, a set of current encoding target feature elements) by referencing feature elements in a current feature/feature map. Intra prediction may be performed based on the spatial similarity of feature elements constituting the feature/feature map. For example, feature elements included in the same region of interest (RoI) within an image/video may be estimated to have similar data distribution characteristics. Accordingly, the intra predictor 322 may predict the current block by referencing the already reconstructed feature elements within the region of interest including the current block. At this time, the referenced feature elements may be located adjacent to the current block or may be located away from the current block depending on the prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of the image/video encoding procedure. Additionally, the directional modes may include prediction modes corresponding to, for example, 33 directional modes or 65 directional modes of an image/video encoding procedure. However, this is an example, and the type and number of intra prediction modes may be set/changed in various ways depending on the embodiment.

The inter predictor 321 may predict the current block based on a reference block (i.e., a set of referenced feature elements) specified by motion information on the reference feature/feature map. Inter prediction may be performed based on the temporal similarity of feature elements constituting the feature/feature map. For example, temporally consecutive features may have similar data distribution characteristics. Accordingly, the inter predictor 321 may predict the current block by referencing the already reconstructed feature elements of features temporally adjacent to the current feature. At this time, motion information for specifying the referenced feature elements may include a motion vector and a reference feature/feature map index. The motion information may further include information about an inter prediction direction (e.g., L0 prediction, L1 prediction, Bi prediction, etc.). In the case of inter prediction, neighboring blocks may include spatial neighboring blocks present within the current feature/feature map and temporal neighboring blocks present within the reference feature/feature map. A reference feature/feature map including a reference block and a reference feature/feature map including a temporal neighboring block may be the same or different. The temporal neighboring block may be referred to as a collocated reference block, etc., and a reference feature/feature map including a temporal neighboring block may be referred to as a collocated feature/feature map. The inter predictor 321 may construct a motion information candidate list based on neighboring blocks and generate information indicating which candidate is used to derive the motion vector and/or reference feature/feature map index of the current block. Inter prediction may be performed based on various prediction modes. For example, in the case of the skip mode and the merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block is used as a motion vector predictor, and the motion vector of the current block may be indicated by signaling the motion vector difference. The predictor 320 may generate a prediction signal based on various prediction methods in addition to intra prediction and inter prediction described above.

The prediction signal generated by the predictor 320 may be used to generate a residual signal (residual block, residual feature elements) (S520). The residual processing procedure (S520) may be performed by the residual processor 330 described above with reference to FIG. 3. In addition, (quantized) transform coefficients may be generated through a transform and/or quantization procedure for the residual signal, and the entropy encoder 340 may encode information about the (quantized) transform coefficients in the bitstream as residual information (S530). Additionally, the entropy encoder 340 may encode information necessary for feature/feature map reconstruction, such as prediction information (e.g., prediction mode information, motion information, etc.), in the bitstream, in addition to the residual information.

Meanwhile, the feature/feature map encoding procedure may further include not only a procedure (S530) for encoding information for feature/feature map reconstruction (e.g., prediction information, residual information, partitioning information, etc.) and outputting it in the form of a bitstream, a procedure for generating a reconstructed feature/feature map for the current feature/feature map and a procedure (optional) for applying in-loop filtering to the reconstructed feature/feature map.

The VCM encoder may derive (modified) residual feature(s) from the quantized transform coefficient(s) through dequantization and inverse transform, and generate a reconstructed feature/feature map based on the predicted feature(s) and (modified) residual feature(s) that are the output of step S510. The reconstructed feature/feature map generated in this way may be the same as the reconstructed feature/feature map generated in the VCM decoder. When an in-loop filtering procedure is performed on the reconstructed feature/feature map, a modified reconstructed feature/feature map may be generated through the in-loop filtering procedure on the reconstructed feature/feature map. The modified reconstructed feature/feature map may be stored in a decoded feature buffer (DFB) or memory and used as a reference feature/feature map in the feature/feature map prediction procedure later. Additionally, (in-loop) filtering-related information (parameters) may be encoded and output in the form of a bitstream. Through the in-loop filtering procedure, noise that may occur during feature/feature map coding may be removed, and feature/feature map-based task performance may be improved. In addition, by performing an in-loop filtering procedure at both the encoder stage and the decoder stage, the identity of the prediction result can be guaranteed, the reliability of feature/feature map coding can be improved, and the amount of data transmission for feature/feature map coding can be reduced.

### Feature/feature map decoding procedure

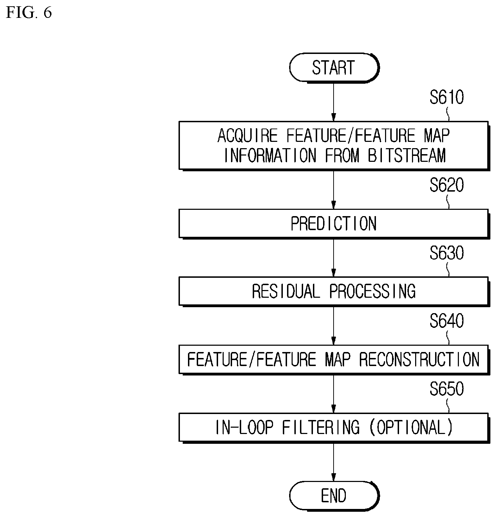

FIG. 6 is a flowchart schematically illustrating a feature/feature map decoding procedure to which embodiments of the present disclosure are applicable.

Referring to FIG. 6, the feature/feature map decoding procedure may include an image/video information acquisition procedure (S610), a feature/feature map reconstruction procedure (S620 to S640), and an in-loop filtering procedure for a reconstructed feature/feature map (S650). The feature/feature map reconstruction procedure may be performed on the prediction signal and residual signal acquired through inter/intra prediction (S620) and residual processing (S630), dequantization and inverse transform process for quantized transform coefficients described in the present disclosure. A modified reconstructed feature/feature map may be generated through an in-loop filtering procedure for the reconstructed feature/feature map, and the modified reconstructed feature/feature map may be output as a decoded feature/feature map. The decoded feature/feature map may be stored in a decoded feature buffer (DFB) or memory and used as a reference feature/feature map in the inter prediction procedure when decoding the feature/feature map. In some cases, the above-described in-loop filtering procedure may be omitted. In this case, the reconstructed feature/feature map may be output without change as a decoded feature/feature map, and stored in the decoded feature buffer (DFB) or memory, and then be used as a reference feature/feature map in the inter prediction procedure when decoding the feature/feature map.

### Feature extraction method and data distribution feature

Embodiments of the present disclosure propose a prediction process necessary for compressing an activation (feature) map generated in a hidden layer of a deep neural network, and a method for generating a related bitstream.

Input data, which is input into a deep neural network, passes through many hidden layers to undergo an operation process, and an operation result of each hidden layer is output as a feature/feature map that has a variety of sizes and channels according to a type of the neural network in use and a position of a hidden layer within the neural network.

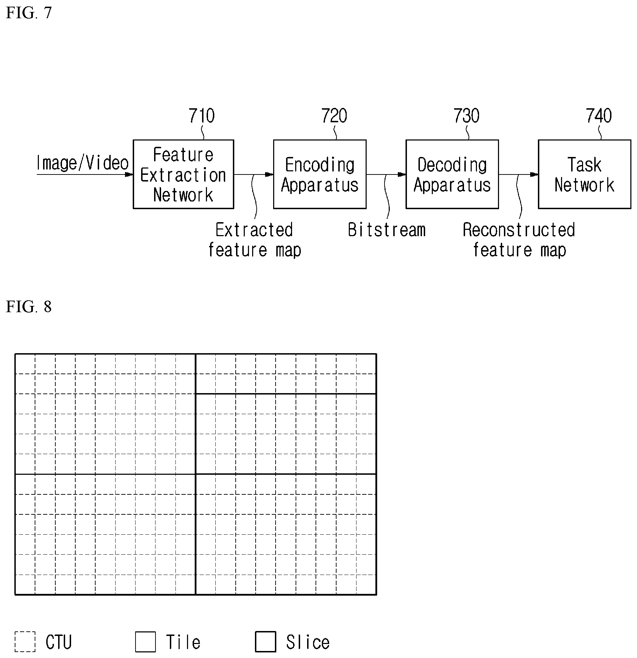

FIG. 7 is a view showing an example of a feature extraction and reconstruction method to which embodiments of the present disclosure are applicable.

Referring to FIG. 7, a feature extraction network 710 may extract a middle-layer activation (feature) map of a neural network from a source image/video and output the extracted feature map. The feature extraction network 710 may be a set of consecutive hidden layers from an input of the neural network.

An encoding apparatus 720 may compress the extracted feature map and output it in a bitstream form, and a decoding apparatus 730 may reconstruct the (compressed) feature map from the output bitstream. The encoding apparatus 720 may correspond to the encoding unit 12 of FIG. 1, and the decoding apparatus 730 may correspond to the decoding unit 22 of FIG. 1. A task network 740 may perform a task based on the reconstructed feature map.

The number of channels of a feature map to be compressed by VCM may vary according to a network used for feature extraction and an extraction position and may be greater than the number of channels of input data.

FIG. 8 is a view showing an example of an image partitioning method to which embodiments of the present disclosure are applicable. As an example, it is a view showing a CTU, a slice and a tile within an image.

A video/image coding method according to the present document may be performed based on the following partitioning structure. Procedures such as prediction, residual processing ((inverse) transform, (inverse) quantization, etc.) syntax element coding and filtering may be performed based on a CTU and a CU (and/or TU, PU) that are derived based on the partitioning structure of FIG. 8. A block partitioning procedure may be performed in an encoding apparatus, and partitioning-related information may be processed by encoding and delivered to a decoding apparatus in a bitstream form. Based on the partitioning-related information obtained from a bitstream, the decoding apparatus may derive a block partitioning structure of a current picture, and based on this, may perform a series of procedures for image decoding (e.g., prediction, residual processing, block/picture reconstruction, in-loop filtering, etc.). A CU size may be equal to a TU size, and a plurality of TUs may be present within a CU area. Meanwhile, a CU size may generally represent a luma component (sample) CB size. A TU size may generally represent a luma component (sample) TB size. A chroma component (sample) CB or TB size may be derived based on a luma component (sample) CB or TB size according to a composition ratio based on a color format (e.g., chroma format and examples of 4:4:4, 4:2:2, 4:2:0) of a picture/image, and a transform/inverse transform may be performed in a TU (TB) unit.

In addition, for video/image coding according to the present document, an image processing unit may have a hierarchical structure. One picture is partitioned into one or more CUs, and one or more CUs may be grouped and distinguished into one or more tiles, bricks, slices and/or tile groups. One slice may include one or more bricks. One brick may include one or more CTU rows within a tile. A slice may include an integer number of bricks of a picture. One tile group may include one or more tiles. One tile may include one or more CTUs. One CTU may be partitioned into one or more CUs. A tile group may include an integer number of tiles according to tile raster scan in a picture. A slice header may carry information/parameter applicable to a corresponding slice (blocks in the slice). A picture header may carry information/parameter applicable to a corresponding picture (or block in the picture). In case an encoding/decoding apparatus has a multi-core processor, an encoding/decoding procedure for the tile, slice, brick and/or tile groups may be processed in parallel. In the present document, a slice or a tile group may be interchangeably used. That is, a tile group header may be referred to as a slice header. Herein, a slice may have one type of slices types including I slice, P slice and B slice.

In an encoding apparatus, a tile/tile group, a brick, a slice, and minimum and maximum coding unit sizes may be determined according to a feature (e.g., resolution) of a video image or in consideration of coding efficiency or parallel processing, and information on it or information capable of deriving it may be included in a bitstream.

In a decoding apparatus, information indicating whether a tile/tile group, a brick, a slice and an in-tile CTU of a current picture are partitioned into a plurality of coding units may be obtained. When such information is obtained (transmitted) only under a specific condition, efficiency may be enhanced.

The slice header (slice header syntax) may include information/parameter that is commonly applicable to the slice. APS (APS syntax) or PPS (PPS syntax) may include information/parameter that is commonly applicable to one or more pictures. The SPS (SPS syntax) may include information/parameter that is commonly applicable to one or more sequences. The VPS (VPS syntax) may include information/parameter that is commonly applicable to multiple layers. The DPS (DPS syntax) may include information/parameter that is commonly applicable to an entire video. The DPS may include information/parameter related to concatenation of a coded video sequence (CVS).

In the present document, a higher-level syntax may include at least one of the APS syntax, the PPS syntax, the SPS syntax, the VPS syntax, the DPS syntax, the picture header syntax, and the slice header syntax.

In addition, for example, information on the partitioning and construction of a tile/a tile group/a brick/a slice may be configured at an encoding stage through the higher-level syntax and be delivered to a decoding apparatus in a bitstream form.

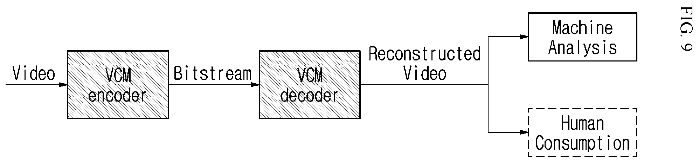

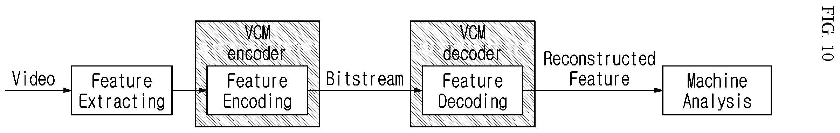

FIG. 9 is a view showing an example of a VCM image encoding/decoding system, and FIG. 10 is a view showing another example of a VCM image encoding/decoding system. As an example, in FIG. 9 and FIG. 10, an image coding system (e.g., FIG. 1) may be expanded/redesigned to use only a portion of a video source or obtain and use a necessary portion/information from the image source according to the request, purpose and surrounding environment of a user or machine. That is, FIG. 9 and FIG. 10 may be related to video coding for machines (VCM).

VCM may mean obtaining an entire image and/or a portion thereof and/or necessary information (feature) of the image according to the request, purpose and surrounding environment of a user or machine and encoding/decoding the entire image and/or the portion thereof and/or the necessary information. In VCM, an encoding target may be an image itself or information referred to as a feature extracted from the image according to the request, purpose and surrounding environment of a user and/or a machine, and it may mean a set of a series of information over time.

Referring to FIG. 9, a VCM system may include an image encoder and an image decoder for VCM. A source device (FIG. 1) may deliver encoded image information to a reception device through a storage medium or network. A user agent of each of the devices may be a human and/or a machine.

Referring to FIG. 10, a VCM system may include an image encoder and an image decoder for VCM. A source device may deliver encoded image information (feature) to a reception device through a storage medium or network. A user agent of each of the devices may be a human and/or a machine.

As an example, a process of extracting information, that is, a feature from an image may be referred to as feature extraction. Feature extraction may be performed both in a video/image capture device and/or a video/image generation device. A feature may be information extracted/processed in an image according to the request, purpose and surrounding environment of a user and/or a machine and mean a set of a series of information over time.

An image encoder for VCM may perform a series of procedures including prediction, transform and quantization for compression and coding efficiency of an entire image and/or a portion of the image and/or a feature. Encoded data may be output in the form of a bitstream.

An image decoder for VCM may decode a video/image by performing a series of procedures including inverse quantization, inverse transform and prediction corresponding to an operation of an encoding apparatus, that is, an encoder.

A decoded image and/or feature may be rendered. Also, it may be used to perform a task of a user or a machine. An example of the task may include AI and computer vision tasks such as face recognition, action recognition and lane recognition.

The present disclosure provides various embodiments about acquisition and coding of an entire image and/or a portion of the image, and unless otherwise stated, the embodiments may also be performed by being combined with each other. A method/embodiment of the present disclosure may be applied to a method disclosed in VCM (Video Coding for Machines) standards.

### VCM hierarchical structure

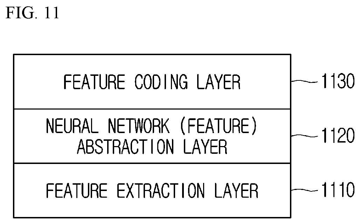

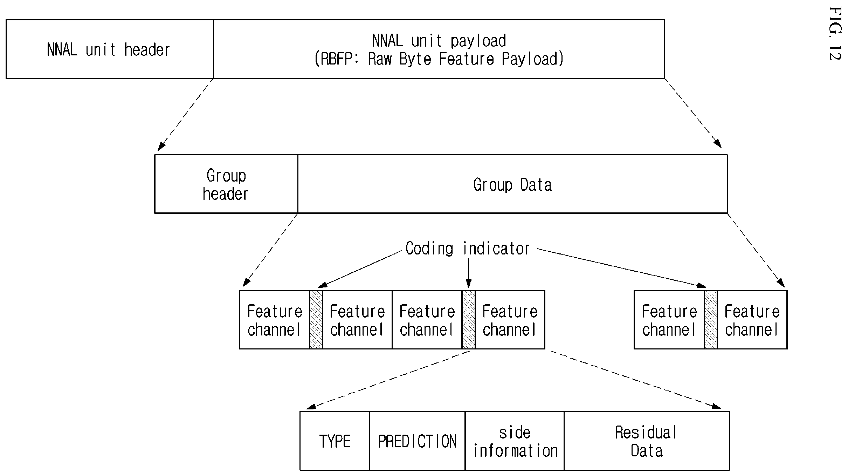

VCM may be based on a hierarchical structure consisting of a feature coding layer, a neural network (feature) abstraction layer and a feature extraction layer. FIG. 11 is a view showing an example of a VCM hierarchical layer, and FIG. 12 is a view showing an example of a VCM bitstream consisting of an encoded abstraction feature and NNAL information.

As an example, referring to FIG. 11, a VCM hierarchical structure may consist of a feature extraction layer 1110, a neural network (feature) abstraction layer 1120 and a feature coding layer 1130.

The feature extraction layer 1110 means a layer for extracting a feature from an input source and may also include a result of extraction. The feature coding layer 1130 means a layer for compressing an extracted feature and may also include a result of compression.

The neural network abstraction layer 1120 may abstract information (e.g., information on an extracted feature/feature map) generated from the feature extraction layer 1110 and deliver it to the feature coding layer 1130. The neural network abstraction layer 1120 may hide the inside of the feature extraction layer 1110 through abstraction of information and provide a consistent feature interface function. Accordingly, even if a compression target becomes different because of a change of tool (e.g., CNN, DNN, etc.), the feature coding layer 1130 may perform a consistent feature coding procedure. In the present disclosure, a neural network abstraction layer (NNAL) may be also be referred to as a feature abstraction layer.

An interface between the feature extraction layer 1110 and the neural network abstraction layer 1120 and an interface between the feature coding layer 1130 and the neural network abstraction layer 1120 may be defined in advance, and an operation in the neural network abstraction layer 1120 may be configured to be subject to change later.

Referring to FIG. 12, a bitstream configured as illustrated herein may be referred to as a neural network abstraction layer (NNAL) unit. An NNAL unit may be one independent feature reconstruction unit. Input features for one NNAL unit may be extracted from a same layer within a neural network. Accordingly, input features for one NNAL unit may be enforced to have a same characteristic. For example, a same feature extraction method may be applied to input features for one NNAL unit.

An NNAL unit may include an NNAL unit header and an NNAL unit payload. An NNAL unit header may include any information necessary for utilizing an encoded feature for a task. An NNAL unit payload may include abstracted feature information. The NNAL unit payload may include a group header and group data. The group header may include configuration information of feature group data such as information on a temporal order of feature channels constituting a feature group, the number of the channels and their common attribute. A feature channel may mean an encoded feature unit. Group data may include a plurality of feature channels and a coding indicator, and each feature channel may include type information, prediction information, side information and residual information. In this case, the type information may indicate an encoding method, and the prediction information may indicate a prediction method. In addition, the side information may indicate additional information necessary for decoding (e.g., information related to entropy coding and quantization), and the residual information may include information on encoded feature elements (e.g., a set of feature value information).

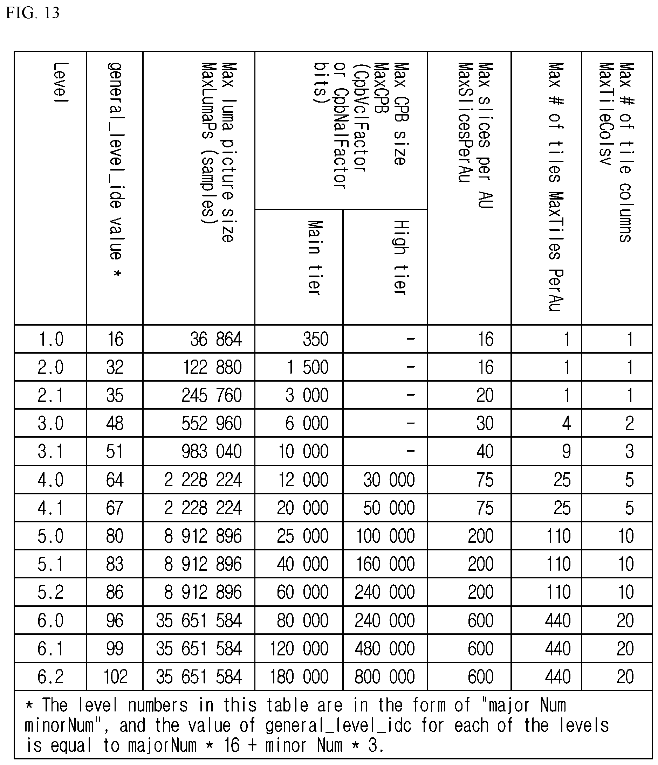

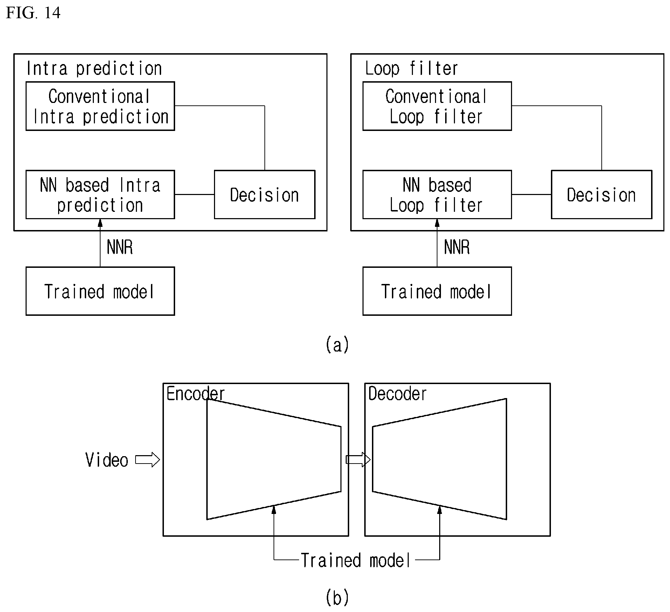

Meanwhile, FIG. 13 is a view showing conventional tiers and levels, and FIG. 14 is a view for describing an encoding/decoding process that applies a neural network-based coding tool. First, according to FIG. 13, for constraints on an available memory and a buffer size, the levels may define a maximum number of applicable pixels, a maximum number of per-second pixels, a maximum size of per-second encoded bitstream, and the like. The tiers may define a maximum size of per-second encoded bitstream. That is, a maximum required resource and a maximum required output may be defined by a level and a tier. By using them, a bitstream suitable for a decoder may be selected, and thus a decoder suitable for a service may be selected. This is because there is no change in an applied coding tool so that there is no change in a maximum required resource and a maximum required output. However, in case an algorithm is changed so that there is a change in a required operation amount and a required memory size, the current fixed level and tier definition method may face a problem that decoder requirements cannot be defined.

For example, a neural network-based technique may change a trained model that may be an algorithm. (a) of FIG. 14 is an example of applying a neural network-based technique for a coding tool unit in a conventional encoding/decoding framework, and (b) of FIG. 14 is an example of applying a neural network-based technique in an end-to-end manner. The two examples may change a trained model through neural network compression and representation (NNR), neural network exchange format (NNEF), open neural network exchange (ONNX) and the like, and it is because hardware running a neural network-based technique may be reused. However, when a neural network model is changed, a resource required for running it may be changed. Accordingly, as disclosed in FIG. 13 to FIG. 14, the level definition method using a fixed value has limitations in representing required resources for various profiles.

Embodiments described in the present disclosure may solve the above-described problem and relate to the above-described coding hierarchy and structure of the VCM system. As an example, a method of improving the neural network abstraction layer 1120 is proposed.

A video codec may define a profile, a tier and a level (PTL) for an appropriate design and application according to its purpose (that is, a service type) and an application environment (e.g., device performance and an available bandwidth). A profile may include information on a coding tool used for encoding/decoding of a video. Specifically, it may represent a constraint on the coding tool (algorithm), and a level may define a maximum number of applicable pixels, a maximum number of per-second pixels, and a maximum size of per-second encoded bitstream as constraints on an available memory size and an available buffer size. In addition, the level may be divided into a plurality of tiers. A maximum size of per-second encoded bitstream may be differently defined according to each tier. Through profile, tier and level (PTL) information of an encoded bitstream, a decoder may check whether the bitstream is suitable for capability of the decoder, and it may be possible because an encoding algorithm is standardized such that there is no change in a resource necessary for decoding the bitstream. Meanwhile, as for a bitstream that is encoded by the conventional method but by a neural network-based technique, it may be difficult to define a necessary resource for decoding only by the existing PTL. It is because unlike the conventional method, the neural network-based technique has great flexibility of algorithms used for encoding/decoding. Specifically, it is because the neural network-based technique may change a compression model (algorithm), and even when the algorithm is changed, hardware (HW) (e.g., mobile TPU, GPU) may be reused. That is, as the neural network-based technique may change an algorithm, it may face a problem when defining a level and a tier by fixed values.

Embodiments described in the present disclosure relate to a technique for solving the above problem by defining a profile, a tier and a level for a video encoder/decoder to which a neural network-based technique is applied. Embodiments described in the present disclosure may be operated separately or in a combination thereof.

Meanwhile, when the present application is described, any contents corresponding to "image" may also be applied to "feature" or "feature map". In addition, any contents corresponding to "feature" or "feature map" may also be applied to "image".

In addition, embodiments of the present disclosure may be combined and used together unless they are mutually contradictory, and this is also included within the scope of the present disclosure.

Hereinafter, embodiments of the present disclosure will be described in detail with reference to the drawings.

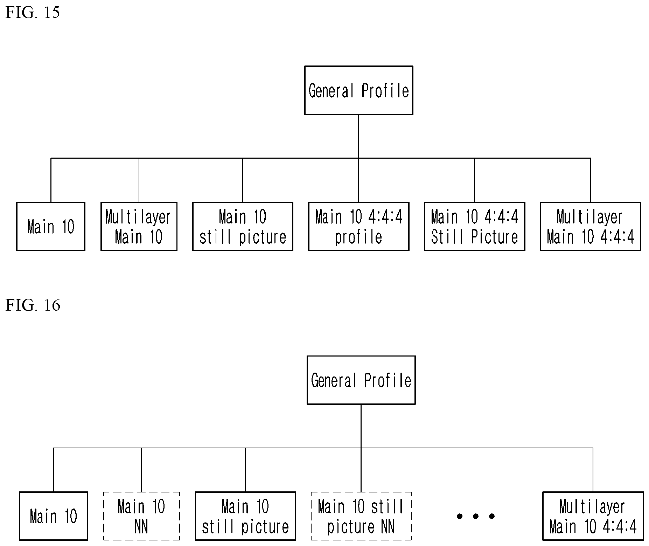

FIG. 15 is a view showing an example of a conventional profile definition structure. In FIG. 15, each profile is independently defined and may be distinguished by an identifier (ID) indicating the profile. For example, the profile identifier (ID) of Main 10 may be defined as 10, and the profile identifier (ID) of Multilayer main 10 may be defined as 17.

FIG. 16, FIG. 17 and FIG. 18 are views showing an example of a profile definition structure according to an embodiment of the present disclosure. FIG. 16 to FIG. 18 may show an example of a method for an expanded profile, including a neural network-based coding profile. FIG. 16 may be a method for additionally defining an expanded profile (e.g., a neural network-based coding profile) according to an embodiment of the present disclosure at a same level as an existing defined profile. As an example, it is a method for additionally defining an expanded profile (e.g., a neural network-based coding profile) at a same level, that is, in parallel with an existing defined profile. For example, a general profile may include Main 10, Main 10 NN (Neural Network), Main 10 still picture, Main 10 still picture NN, ..., and Multilayer Main 10 4:4:4.

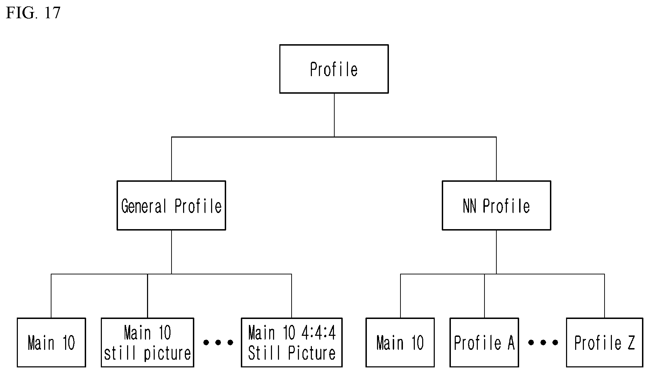

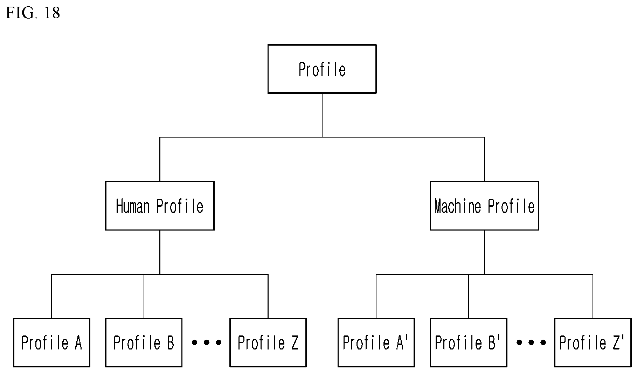

Meanwhile, a different coding tool may be applied according to each expanded profile (e.g., a profile to which a neural network-based coding tool is applied and a profile to which no neural network-based coding tool is applied), but a same service and a same purpose may be supported. For example, a bitdepth and a color format may be identical. In this case, there may be a Main 10 neural network Profile that applies a coding tool (e.g., a neural network-based coding tool) for an expanded profile supporting a same input and a same output as the existing Main 10 Profile. FIG. 17 and FIG. 18 are views showing a method for distinguishing layers of each profile according to an embodiment of the present disclosure. Referring to FIG. 17, according to a characteristic of a coding tool, a profile may be defined in a first layer first, and then the profile may be defined in detail in a second layer. This is for responding to increasingly diverse operation environment of an encoding/decoding apparatus. For example, the use of GPU, NPU and the like increases in image encoding/decoding and image processing, but such resources are not available in every device. When such a resource need to be used for decoding, corresponding information may have to be defined in PTL. In this case, the PLT may be defined according to a type of a required resource through the profile definition method disclosed in FIG. 17 according to an embodiment of the present disclosure. For example, a general profile and an expanded profile (e.g., a neural network (NN) profile) may be distinguished in a first layer, and detailed profiles may be applied to the profiles distinguished in the first layer. For example, the general profile may correspond to conventional video codec techniques like HEVC and VVC and include Main 10, Main 10 still picture, and Main 10 4:4:4 Still Picture. Meanwhile, in case the expanded profile is a neural network-based profile, it may include Main 10, Profile A, ..., Profile Z. Thus, PTL is divided to support various types of devices, and such division is advantageous in supporting efficient decoding.

As an example, referring to FIG. 18, profiles may be distinguished in a first layer according to a purpose of use and a target, and then the profiles may be defined in detail in a second layer. In the past, the consumers of videos were mostly humans, but the current trend is that more and more videos are consumed by machines such as robots, self-driving cars and AIs, and a layer definition reflecting the trend may be required. It is because humans and machines may need different types of information and thus a method of encoding/decoding information required by humans and a method of encoding/decoding information required by machines may be different from each other. In this regard, as an embodiment of the present disclosure, the profile definition method of FIG. 16 is advantageous in efficiently defining PTL according to a consumption target, a purpose and the like. Meanwhile, according to FIG. 18, a human profile and a machine profile may be distinguished in a first layer, and then a detailed profile of the profiles may be defined according to each consumption target, that is, a purpose. The human profile may include Profile A, B, ... Z, and the machine profile may include Profile A', B', ... Z'.

Table 1 below is an example of a profile structure that may be defined according to FIG. 16 to FIG. 18.

**[Table 1]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==GENERAL_PROFILE){** | |
| **general_profile_idc** | u(3) |
| } | |
| else if(**profile_idc ==NN_PROFILE)** | |
| { | |
| **nn_profile_idc** | u(3) |
| } | |
| } | |
| } | |

A syntax structure profile_tier_level for the profile structure may be signaled by being included in a parameter set including a VPS. A syntax element profile_idc (e.g., a first syntax element) may be information on a profile indicator (or profile identifier) and indicate a major classification consisting of a coding tool and a resource which are required according to a purpose and a use of an encoded bitstream. The first syntax element may be signaled based on information (e.g., profileTierPresentFlag) indicating whether PTL information is present. In addition, the first syntax element may indicate GENERAL_PROFILE representing a general profile and NN_PROFILE representing a neural network-based profile. As an example, in case a first syntax element value indicates a general profile, it may mean that an encoded bitstream is encoded by a conventional codec (e.g., VVC, HEVC, etc.) and a resource. On the other hand, in case a first syntax element value does not indicate any general profile, it may mean that an encoded bitstream is encoded by using a neural network-based coding tool and a resource such as GPU and NPU.

A syntax element general_profile_idc (e.g., a second syntax element) is a general profile indicator and may be signaled based on a profile indicator (or a profile identifier). As an example, in case a value of a profile indicator (e.g., profile_idc, the first syntax element) indicates a general profile (e.g., GENERAL_PROFILE), it may be signaled and represent a detailed classification of a general profile. The syntax element may indicate a detailed profile including a coding tool.

A syntax element nn_profile_idc (e.g., a third syntax element) is a neural network-based profile indicator and may be signaled bed on a profile indicator (or a profile identifier). As an example, in case a value of a profile indicator (e.g., profile_idc, the first syntax element) indicates a neural network-based profile (e.g., NN_PROFILE), it may represent a detailed classification of the neural network-based profile. The syntax element may indicate a detailed profile including a coding tool. That is, a type of an applicable neural network-based tool may be different according to a value of the third syntax element. In addition, whether a level is expandable may also be defined according to a value of the third syntax element. For example, in case the third syntax element indicates a specific value, an input image may be subject to a predefined resource constraint, but in case the third syntax element indicates another specific value, it may mean that a resource constraint for an input image may be changed through expansion.

Table 2 below is an example of a profile structure that may be defined according to FIG. 16 to FIG. 18.

**[Table 2]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==HUMAN_PROFILE){** | |
| **human_profile_idc** | u(3) |
| } | |
| else if(**profile_idc ==MACHINE_PROFILE)** | |
| { | |
| **machine_profile_idc** | u(3) |
| } | |
| } | |
| } | |

A syntax element profile_idc (e.g., a first syntax element) may be information on a profile indicator (or profile identifier) and indicate a major classification consisting of a coding tool and a resource which are required according to a purpose and a use of an encoded bitstream. The first syntax element may be signaled based on information (e.g., profileTierPresentFlag) indicating whether PTL information is present. In addition, the first syntax element may indicate a human recognition-based profile, that is, a human analysis-based profile (e.g., HUMAN_PROFILE) or a machine recognition-based profile, that is, a machine analysis-based profile (e.g., MACHINE_PROFILE). In case a value of the first syntax element is the human analysis-based profile (e.g., HUMAN_PROFILE), it may mean that an encoded bitstream is encoded to be viewed by a human. In addition, in this case, it may mean that a coding tool and an evaluation criterion applied to an input image are configured to be suitable for the human's viewing. On the other hand, in case a first syntax element value is not the human analysis-based profile (e.g., MACHINE_PROFILE), it may mean that an encoded bitstream is encoded to perform a machine task. In this case, a coding tool and an evaluation criterion applied to an input image may be configured to be suitable for the machine task.

A syntax element human_profile_idc (e.g., a fourth syntax element) is a human profile (that is, a human analysis-based profile) indicator and may be signaled, when a profile indicator (e.g., the first syntax element profile_idc) value is a human analysis-based profile (e.g., HUMAN_PROFILE), and represent a detailed classification of a human profile. A type of a coding tool applicable to an input image may be different according to a fourth syntax element value. A specific fourth syntax element value may be configured only by a coding tool with a same characteristic as a conventional coding method (e.g., VVC, HEVC, etc.). On the other hand, a specific fourth syntax element value may represent the use of an expanded coding tool, and for example, may apply a neural network-based coding tool to an input image. In this case, whether a level (e.g., a required resource) is expandable may also be defined based on the fourth syntax element value. For example, a fourth syntax element value may indicate that an input image may be subject to a predefined resource constraint, while a specific fourth syntax element value may indicate that a resource constraint of an input image may be changed through expansion.

A syntax element machine_profile_idc (e.g., a fifth syntax element) is a machine profile (that is, a machine analysis-based profile) indicator and may represent a detailed classification of a human profile, when a profile indicator (e.g., the first syntax element profile_idc) value is a machine analysis-based profile (e.g., MACHINE_PROFILE). A type of an applicable coding tool may be different according to a fifth syntax element value. A specific fifth syntax element value may indicate that it is configured only by a coding tool with a same characteristic as a conventional coding method (e.g., VVC, HEVC, etc.). On the other hand, a specific fifth syntax element value may indicate that a neural network-based coding tool is applied. In this case, whether a level (e.g., a required resource) is expandable may also be defined based on the fifth syntax element value. For example, a specific fifth syntax element value may indicate that an input image is subject to a predefined resource constraint, while a specific fifth syntax element value may indicate that a resource constraint of an input image may be changed through expansion.

Table 3 below is an example of a profile structure that may be defined according to FIG. 16 to FIG. 18.

**[Table 3]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==HUMAN_PROFILE){** | |
| **human_profile_idc** | u(3) |
| } | |
| else **if(profile_idc ==MACHINE_PROFILE)** | |
| { | |
| **machine_profile_idc** | u(3) |
| } | |
| else if(**profile_idc ==GENERAL_PROFILE)** | |
| { | |
| **general_profile_idc** | |
| } | |
| else if(**profile_idc == NN_PROFILE)** | |
| { | |
| **nn_profile_idc** | |
| } | |
| } | |
| } | |

A syntax element profile_idc (e.g., a first syntax element) may be information on a profile indicator (or profile identifier) and indicate a major classification consisting of a coding tool and a resource which are required according to a purpose and a use of an encoded bitstream. The first syntax element may be signaled based on information (e.g., profileTierPresentFlag) indicating whether PTL information is present. In addition, the first syntax element may indicate a human recognition-based profile, that is, a human analysis-based profile (e.g., HUMAN_PROFILE), a machine recognition-based profile, that is, a machine analysis-based profile (e.g., MACHINE_PROFILE), a general profile (e.g., GENERAL_PROFILE), or a neural network-based profile (e.g., NN_PROFILE). This will not be redundantly described herein. The syntax element human_profile_idc (e.g., the fourth syntax element) has already been described above and will not be redundantly described herein.

The syntax element machine_profile_idc (e.g., the fifth syntax element) has already been described above and will not be redundantly described herein.

The syntax element general_profile_idc (e.g., the second syntax element) has already been described above and will not be redundantly described herein.

The syntax element nn_profile_idc (e.g., the third syntax element) has already been described above and will not be redundantly described herein.

Meanwhile, the second syntax element, the third syntax element, the fourth syntax element and the fifth syntax element may be collectively referred to as a sixth syntax element sub_profile_idc. The sixth syntax element is a sub-profile indicator and may be signaled according to a profile indicator of a higher layer (e.g., the first syntax element profile_idc) and represent a corresponding detailed profile. The second syntax element, the third syntax element, the fourth syntax element and the fifth syntax element may all represent a detailed profile for a profile indicator determined in a higher layer, which is the same as described above. Its meaning may be different according to a profile indicator of a higher layer but also be defined as one variable (e.g., the sixth syntax element sub_profile_idc). That is, the second syntax element to the fifth syntax element may be replaced by the sixth syntax element.

Meanwhile, when FIG. 17 to FIG. 18 are described, profiles of each layer are distinguished based on a purpose or means, but this is an embodiment of the present disclosure, and it is obvious that the name and content of each profile may be different. For example, an expanded profile, which is distinguished from a general profile, may include a neural network-based profile, a human analysis-based profile, and a machine analysis-based profile, and each of the profiles may be described in the same manner as above.

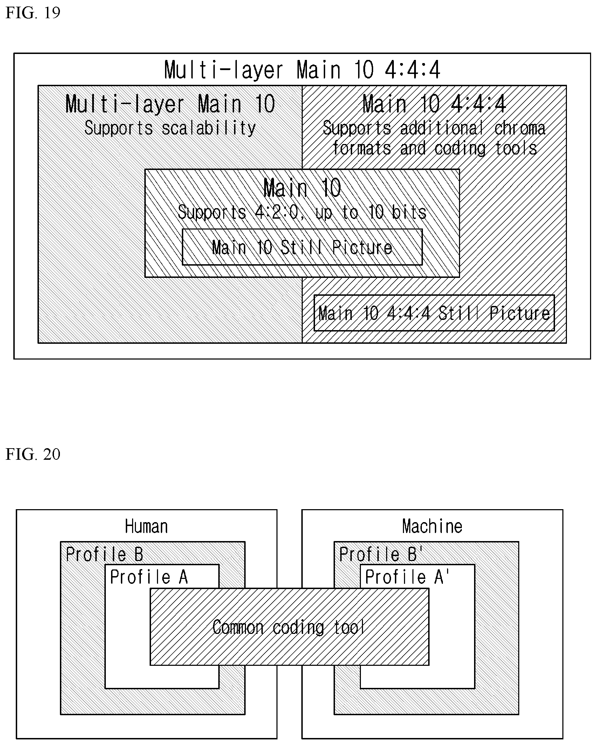

Meanwhile, for clarity of description, each of the profiles is individually described above, and a detailed profile corresponding to each profile is individually described above, but this is for obviousness of description, and there may actually be a common coding tool between detailed profiles. FIG. 19 and FIG. 20 show a conventional profile structure and a profile structure according to an embodiment of the present disclosure respectively. First, in FIG. 19 showing a conventional PTL structure, the PTL structure has a lower profile included in a higher profile so that there may be a significant common part between each profile. However, as described above, because profiles may have a different purpose (and compression target) and require a different resource, a structure of including a lower profile may not be appropriate. In this regard, FIG. 20 shows a profile structure according to an embodiment of the present disclosure, visualizing a proposed hierarchical profile structure (e.g., the above-described profile structure of FIG. 17 and FIG. 18). For example, an interface and coding tools, which need to be commonly used, may be shared in a higher layer, and a profile of the higher layer may be subdivided in a lower layer. Thus, a profile structure may be efficiently defined, and a required coding tool may be easily shared.

Meanwhile, according to the present disclosure, in case level expansion is possible, in other words, in case it is possible to define an additional level, whether additional information is encoded and the additional information may be signaled. For example, by using an expanded profile (e.g., a neural network-based profile or a machine analysis-based profile), a neural network-based in-loop filter model may be changed according to a type of a task to be performed in encoding/decoding, and a required resource may also be changed.

Table 4 below is an example of a profile structure that may be defined according to FIG. 16 to FIG. 18.

**[Table 4]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==GENERAL_PROFILE)** | |
| { | |
| **general_profile_idc** | |
| } | |
| else if(**profile_idc == NN_PROFILE)** | |
| { | |
| **nn_profile_idc** | |
| } | |
| if(profile_idc ==NN_profile&&nn_profile_idc== expandable_nn_profile_idc){ | |
| **level_extension_flag** | u(1) |
| } | |
| if(level_extension_flag){ | |
| **neural_network_decoding_capability_information()** | |
| } | |
| } | |
| } | |

The syntax element profile_idc (e.g., the first syntax element) may be a profile indicator. This will not be redundantly described herein. The syntax element general_profile_idc (e.g., the second syntax element) may be a general profile indicator. This will not be redundantly described herein.

The syntax element nn_profile_idc (e.g., the third syntax element) may be a neural network profile indicator. This will not be redundantly described herein.

A syntax element level_extension_flag (e.g., a seventh syntax element) may be level extension information indicating whether a level is extended. This may be signaled based on the first syntax element and/or the third syntax element. As an example, in case a value of the first syntax element indicates a neural network-based profile (e.g., NN_PROFILE) and a value of the third syntax element indicates an expandable neural network-based profile (e.g., expandable_nn_profile_idc), the seventh syntax element, which is information indicating whether a level is extended, may be signaled. Herein, if the value of the third syntax element indicates the expandable neural network-based profile (e.g., nn_profile_idc = expandable_nn_profile_idc), it may mean that the third syntax element is not one specific profile value but indicates every detailed neural network profile indicator with expandable level. That is, expandable_nn_profile_idc is used to represent any expandable detailed neural network profiles but may not refer to a specific detailed neural network profile. Meanwhile, if the value of the seventh syntax element is a first value (e.g., 1), it may mean that expanded level information is defined apart from predefined level information. **In** this case, information on an expanded level may be signaled as the seventh syntax element (e.g., neural_network_decoding_capability_information(), that is, neural_network_decoding_capability_information()_rbsp). If the value of the seventh syntax element is a second value (e.g., 0), it may mean that there is no expanded other than a predefined content (such as a resource).

The syntax element neural_network_decoding_capability_information(), that is, neural_network_decoding_capability_information()_rbsp (e.g., an eighth syntax element) may be information on an expanded level as information on neural network-based coding capability and be signaled based on level expansion information (e.g., the seventh syntax element). This will not be redundantly described herein.

Table 5 below is an example of a profile structure that may be defined according to FIG. 16 to FIG. 18.

**[Table 5]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==HUMAN_PROFILE){** | |
| **human_profile_idc** | u(3) |
| } | |
| else if(**profile_idc ==MACHINE_PROFILE)** | |
| { | |
| **machine_profile_idc** | u(3) |
| } | |
| i f(profile_idc == **MACHINE_PROFILE&& machine_profile _idc==** expandable_machine_profile_idc){ | |
| **level_extension_flag** | u(1) |
| } | |
| i f(profile_idc == **HUMAN_PROFILE&& human_profile_idc==** expandable_human_profile_idc){ | |
| **level_extension_flag** | u(1) |
| } | |
| if(level_extension_flag){ | |
| **neural_network_decoding_capability_information()** | |
| } | |
| } | |
| } | |

The syntax element profile_idc (e.g., the first syntax element) may be a profile indicator. This will not be redundantly described herein. The syntax element human_profile_idc (e.g., the fourth syntax element) may be a human profile indicator (that is, a human analysis-based profile indicator). This will not be redundantly described herein.

The syntax element machine_profile_idc (e.g., the fifth syntax element) may be a machine profile indicator (that is, a machine analysis-based profile indicator). This will not be redundantly described herein.

As described above, the syntax element level_extension_flag (e.g., the seventh syntax element) may be level extension information indicating whether a level is extended. This may be signaled based on the first syntax element, the fourth syntax element and/or the fifth syntax element. Meanwhile, as an example, in case a value of the first syntax element indicates a machine analysis-based profile (e.g., MACHINE_PROFILE) and a value of the fifth syntax element indicates an expandable machine analysis-based profile (e.g., expandable _machine_profile_idc), the seventh syntax element, which is information indicating whether a level is extended, may be signaled. As another example, in case a value of the first syntax element indicates a human analysis-based profile (e.g., HUMAN_PROFILE) and a value of the fourth syntax element indicates an expandable human analysis-based profile (e.g., expandable_human_profile_idc), the seventh syntax element, which is information indicating whether a level is extended, may be signaled. Herein, if the value of the fourth syntax element indicates an expandable human analysis-based profile (e.g., human_profile_idc = expandable_human_profile_idc) or the value of the fifth syntax element indicates an expandable machine analysis-based profile (e.g., machine_profile_idc = expandable _machine_profile_idc), it may mean that the fourth syntax element or the fifth syntax element is not one specific profile value but indicates every detailed profile indicator with expandable level. That is, expandable _machine_profile_idc is used to represent any expandable detailed machine-based profiles, and expandable_human_profile_idc is used to represent any expandable detailed human-based profiles. In other words, a corresponding value may not refer to a specific detailed neural network profile. Meanwhile, if the value of the seventh syntax element is a first value (e.g., 1), it may mean that expanded level information is defined apart from predefined level information. In this case, information on an expanded level may be signaled as the seventh syntax element (e.g., neural_network_decoding_capability_information(), that is, neural_network_decoding_capability_information()_rbsp). If the value of the seventh syntax element is a second value (e.g., 0), it may mean that there is no expanded other than a predefined content (such as a resource).

The syntax element neural_network_decoding_capability_information(), that is, neural_network_decoding_capability_information()_rbsp (e.g., the eighth syntax element) may be information on a required resource as information on an expanded level as information on neural network-based coding capability and be signaled based on level expansion information (e.g., the seventh syntax element). As an example, the eighth syntax element may mean that a size of a resource available for a neural network-based coding tool is defined by separate raw byte sequence payloads (RBSP). For example, a size of a required resource such as a maximum operation amount and a maximum memory (e.g., max_flops and max_memory) may be defined by the seventh syntax element. This will be described in further details with reference to another Table 7 below.

Table 6 below is an example of a profile structure that may be defined according to FIG. 16 to FIG. 18.

**[Table 6]**

| | |
|---|---|
| profile _tier_level(profileTierPresentFlag, MaxNumSubLayersMinus1 ) { | **Descriptor** |
| if( profileTierPresentFlag ) { | |
| **profile_idc** | u(1) |
| **if(profile_idc ==HUMAN_PROFILE){** | |
| **human_profile_idc** | u(3) |
| } | |
| else if(**profile_idc ==MACHINE_PROFILE)** | |
| { | |
| **machine_profile_idc** | u(3) |
| } | |
| else if(**profile_idc ==GENERAL_PROFILE)** | |
| { | |
| **general_profile_idc** | |
| } | |
| else if(**profile_idc** == **NN_PROFILE)** | |
| { | |
| **nn_profile_idc** | |
| } | |
| if(profile_idc ==NN_profile&&nn_profile_idc== expandable_nn_profile_idc){ | |
| **level_extension_flag** | u(1) |
| } | |
| i f(profile_idc == **MACHINE_PROFILE&& machine_profile _idc==** | |
| **e**xpandable_machine_profile_idc){ | |
| **level_extension_flag** | u(1) |
| } | |
| i f(profile_idc == **HUMAN_PROFILE&& human_profile_idc==** | |
| expandable_human_profile_idc){ | |
| **level_extension_flag** | u(1) |
| } | |
| if(level_extension_flag){ | |
| **neural_network_decoding_capability_information()** | |
| } | |
| } | |
| } | |

The syntax element profile_idc (e.g., the first syntax element) may be a profile indicator. This will not be redundantly described herein. The syntax element general_profile_idc (e.g., the second syntax element) may be a general profile indicator. This will not be redundantly described herein.

The syntax element nn_profile_idc (e.g., the third syntax element) may be a neural network profile indicator. This will not be redundantly described herein.

The syntax element human_profile_idc (e.g., the fourth syntax element) may be a human profile indicator (that is, a human analysis-based profile indicator). This will not be redundantly described herein.

The syntax element machine_profile_idc (e.g., the fifth syntax element) may be a machine profile indicator (that is, a machine analysis-based profile indicator). This will not be redundantly described herein.

Meanwhile, in Table 6, expandable_machine_profile_idc and expandable_human_profile_idc do not each mean an expandable specific machine or human profile value but may be used to collectively mean any machine profile indicators and any human profile indicators with expandable level, respectively.

As described above, the syntax element level_extension_flag (e.g., the seventh syntax element) may be level extension information indicating whether a level is extended. This may be signaled based on the first syntax element, the second syntax element, the third syntax element, the fourth syntax element and/or the fifth syntax element. This will not be redundantly described herein.

The syntax element (structure) neural_network_decoding_capability_information() (that is, neural_network_decoding_capability_information_rbsp) (e.g., the eighth syntax element (structure)) is information on neural network-based coding capability and may be information on an expanded level. This will not be redundantly described herein.

Table 7 below is an example of an expanded level structure, that is, a detailed example of a syntax element that may be included in the eighth syntax element (structure).

**[Table 7]**

| | |
|---|---|
| profile_tier_level(profileTierPresentFlag, MaxNumSubLayersMinus1 ) { | **Descriptor** |
| if( profileTierPresentFlag ) { | |
| **profile_idc** | u(1) |
| if**(profile_idc ==HUMAN_PROFILE){** | |
| **human_profile_idc** | u(3) |
| } | |
| else **if(profile_idc ==MACHINE_PROFILE)** | |
| { | |
| **machine_profile_idc** | u(3) |
| } | |
| else if(**profile_idc ==GENERAL_PROFILE)** | |
| { | |
| **general_profile_idc** | |
| } | |
| else if(**profile_idc == NN_PROFILE)** | |
| { | |
| **nn_profile_idc** | |
| } | |
| if(profile_idc ==NN_profile&&nn_profile_idc== expandable_nn_profile_idc){ | |
| **level_extension_flag** | u(1) |
| } | |
| i f(profile_idc == **MACHINE_PROFILE&& machine_profile _idc==** | |
| expandable_machine_profile_idc){ | |
| **level_extension_flag** | u(1) |
| } | |
| i f(profile_idc == **HUMAN_PROFILE&& human_profile_idc==** | |
| expandable _human_profile_idc){ | |
| **level_extension_flag** | u(1) |
| } | |
| if(level_extension_flag){ | |
| **neural_network_decoding_capability_information()** | |
| } | |
| } | |
| } | |

A syntax element max_flops (e.g., a ninth syntax element) may be a maximum required operation amount. Floating point operations per second (FLOPS) may mean a number of float operations that may be performed in one second. Apart from FLOPS, a maximum operation amount may be defined by using a variable (e.g., multiply accumulate (MAC)) that means a resource size for running a neural network (NN)-based technique. A syntax element max_memory (e.g., a tenth syntax element) may be a maximum required memory. A size of a required peak memory may be different according to an applied neural network model. When a corresponding model is updated, the tenth syntax element may have to be updated.

A syntax element nndci_extension_flag (e.g., an eleventh syntax element) is information indicating whether extension data information is present, and may be extension data presence information (e.g., additional resource presence information), that is, neural network decoding capability information (DCI) extension information. As an example, if a value of the eleventh syntax element is a first value (e.g., 0), it may mean that no extension data information (e.g., a twelfth syntax element nndci_extension_data_flag) is not signaled. On the other hand, if the value of the eleventh syntax element is a second value (e.g., 1), extension data information (e.g., the twelfth syntax element nndci_extension_data_flag) may be present in the eighth syntax element (structure) (e.g., neural_network_decoding_capability_information_rbsp). The eleventh syntax element may be information for a case in which additional resource information is needed to run a neural network-based technique. As an example, there may be a change in decoding capability during a video service, that is, an available resource may increase or decrease because of, for example, a constraint on an encoder/decoder resource. In this case, the eleventh syntax element, which may be signaled, is decoding capability information (DCI) extension data, and as DCI may include PTL information (e.g., profile_tier_level) and the PTL information may include the eighth syntax element (structure) (e.g., neural_network_decoding_capability_information_rbsp), information on a resource may be updated through a DCI unit (e.g., DCI_NAL unit). In addition, in case decoding capability is changed in an encoding/decoding apparatus, the eighth syntax element (e.g., neural_network_decoding_capability_information_rbsp) may be redefined by signaling the eleventh syntax element, and thus video encoding/decoding may be performed according to the decoding capability of the apparatus.

The syntax element nndci_extension_data_flag (e.g., the twelfth syntax element) may mean extension data information. As an example, the twelfth syntax element may be signaled based on the eleventh syntax element. In addition, the twelfth syntax element may be signaled further based on a specific syntax element (e.g., more_rbsp_data()) indicating whether residual data is present. Meanwhile, a value of the twelfth syntax element is a first value (e.g., 1), it may indicate presence of information on an additional resource. On the other hand, the value of the twelfth syntax element is a second value (e.g., 0), it may mean that there is no information on an additional resource. In addition, for future resource extension, an additionally required resource may be defined by the twelfth syntax element, apart from an operation amount and a memory.

According to the present disclosure, a flexible encoding/decoding method may be applied according to the performance of an apparatus and a service purpose, which may result in improved coding efficiency.

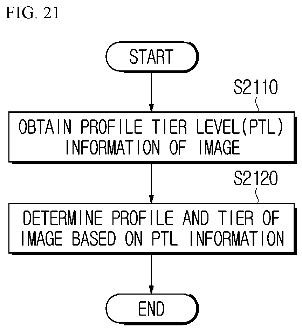

FIG. 21 is a view showing an image decoding method according to an embodiment of the present disclosure. As an example, the image decoding method of FIG. 21 may be performed by an image decoding apparatus. In addition, as the description of the embodiment described above may be applied to description of FIG. 21, FIG. 21 will not be redundantly described herein.

As an example, PTL information of an image may be obtained (S2110). The PTL information may be encoded in a bitstream. In addition, the PTL information may include the above-described profile_tier_level.

Next, based on the PTL information, a profile and a tier of an image may be determined (S2120). As an example, the PTL information may include a profile indicator representing a type of a profile for an image, and the profile type may be classified according to a purpose, a viewing target, and the like. As an example, the profile type may include a basic profile (e.g., a first type) and an expanded profile (e.g., a second type). As an example, the basic profile may be a general profile, and the expanded profile may include a neural network (NN)-based profile and a machine analysis-based profile. Meanwhile, the expanded profile may further include a human analysis-based profile. In addition, based on a profile indicator (e.g., a first syntax element), a detailed profile indicator (e.g., a second syntax element to a sixth syntax element) for the type of the profile may further be obtained. Herein, the detailed profile indicator may include information on a detailed profile capable of level expansion. Meanwhile, based on a profile indicator, expanded level presence information (e.g., a seventh syntax element) indicating whether a level is expanded may further be obtained. In addition, based on the expanded level presence information, information on a required resource (e.g., an eighth syntax element (structure)) may further be obtained. As an example, the information on the required resource may include at least one or more of a maximum operation amount (e.g., a ninth syntax element), a maximum memory (e.g., a tenth syntax element), or additional resource presence information (e.g., an eleventh syntax element). As an example, based on the additional resource presence information, addition resource information (e.g., a twelfth syntax element) may further be obtained.

As an example, the names of the first syntax element to the twelfth syntax element are arbitrarily designated for clarity of descriptions and do not put any limitations in naming a corresponding syntax element. In addition, the first syntax element to the twelfth syntax element may be referred to as first information to twelfth information respectively. In addition, the first syntax element to the twelfth syntax element may be obtained from a bitstream and also be derived by another syntax element, which may also be included in an embodiment of the present disclosure.

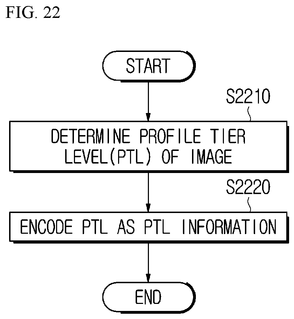

FIG. 22 is a view showing an image encoding method according to an embodiment of the present disclosure. As an example, the image encoding method of FIG. 22 may be performed by an image encoding apparatus. In addition, as the description of the embodiment described above may be applied to description of FIG. 22, FIG. 22 will not be redundantly described herein.

First, PTL information of an image may be determined (S2210). PTL may be determined and then information related to PTL may also be determined.

Next, PTL may be encoded as PTL information of the image (S2220). In addition, the PTL information may include the above-described profile_tier_level. Herein, the PTL information may include a profile indicator (e.g., a first syntax element) representing a type of a profile for the image, and a profile type may be classified according to a purpose and a viewing target. As an example, the profile type may include a basic profile (e.g., a first type) and an expanded profile (e.g., a second type). As an example, the basic profile may be a general profile, and the expanded profile may include a neural network (NN)-based profile and a machine analysis-based profile. Meanwhile, the expanded profile may further include a human analysis-based profile.

In addition, when a profile type is determined, a detailed profile type for the profile type may be determined. The detailed profile type for the profile type is a detailed profile indicator (e.g., a second syntax element to a sixth syntax element) and may be encoded in a bitstream. Herein, the detailed profile indicator may include information on a detailed profile capable of level expansion. Meanwhile, whether a level is expanded may further be determined based on the profile type. Whether a level is expanded is expanded level presence information (e.g., a seventh syntax element) and may be encoded in a bitstream. In addition, based on whether a level is expanded, information on a required resource (e.g., an eighth syntax element (structure)) may further be determined. As an example, the information on the required resource may include at least one or more of a maximum operation amount (e.g., a ninth syntax element), a maximum memory (e.g., a tenth syntax element), or additional resource presence information (e.g., an eleventh syntax element). In addition, the information on the required resource may be encoded in a bitstream. As an example, additional resource presence information may be information regarding whether an additional resource is present. Based on whether an additional resource is present, additional resource information (e.g., a twelfth syntax element) may further be determined, and the additional resource information may be encoded in a bitstream.

As an example, the names of the first syntax element to the twelfth syntax element are arbitrarily designated for clarity of descriptions and do not put any limitations in naming a corresponding syntax element. In addition, the first syntax element to the twelfth syntax element may be referred to as first information to twelfth information respectively. In addition, the first syntax element to the twelfth syntax element may be obtained from a bitstream and also be derived by another syntax element, which may also be included in an embodiment of the present disclosure.

Additionally, a bitstream generated by the image encoding method may be stored in a non-transitory computer-readable recording medium.

Additionally, as another example, a bitstream generated by the image encoding method may be transmitted to another apparatus (e.g., an image decoding apparatus). In this case, a method for transmitting the bitstream may include a process of transmitting the bitstream.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Embodiments described in the present disclosure may be implemented and performed on a processor, microprocessor, controller, or chip. For example, the functional units shown in each drawing may be implemented and performed on a computer, processor, microprocessor, controller, or chip. In this case, information for implementation (e.g., information on instructions) or algorithm may be stored in a digital storage medium.

In addition, the decoder (decoding apparatus) and the encoder (encoding apparatus), to which the embodiment(s) of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, an argument reality (AR) device, a video telephony video device, a transportation terminal (e.g., vehicle (including autonomous vehicle) terminal, robot terminal, airplane terminal, ship terminal, etc.) and a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

Additionally, a processing method to which the embodiment(s) of the present disclosure is applied may be produced in the form of a program executed by a computer and stored in a computer-readable recording medium. Multimedia data having a data structure according to the embodiment(s) of this document may also be stored in a computer-readable recording medium. Computer-readable recording media include all types of storage devices and distributed storage devices that store computer-readable data. Computer-readable recording media include, for example, Blu-ray Disc (BD), Universal Serial Bus (USB), ROM, PROM, EPROM, EEPROM, RAM, CD-ROM, magnetic tape, floppy disk, and optical data storage device. Additionally, computer-readable recording media include media implemented in the form of carrier waves (e.g., transmission via the Internet). Additionally, the bitstream generated by the encoding method may be stored in a computer-readable recording medium or transmitted through a wired or wireless communication network.

Additionally, the embodiment(s) of the present disclosure may be implemented as a computer program product by program code, and the program code may be executed on a computer by the embodiment(s) of the present disclosure. The program code may be stored on a carrier readable by a computer.

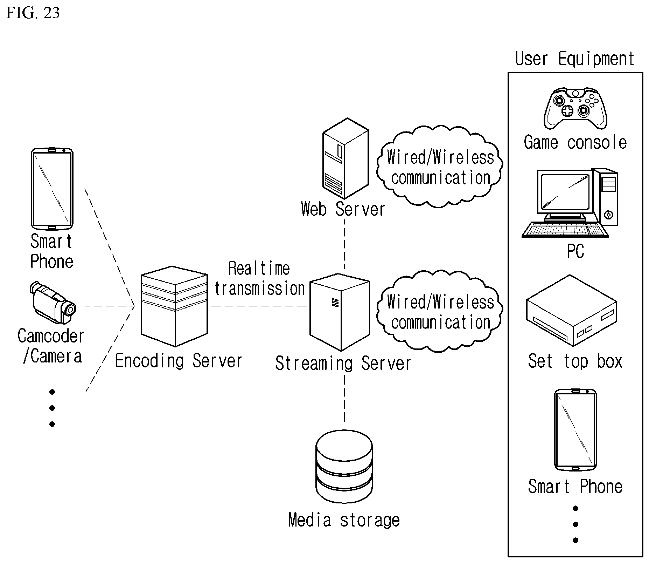

FIG. 23 is a view illustrating an example of a content streaming system to which embodiments of the present disclosure are applicable.

Referring to FIG. 23, the content streaming system, to which the embodiment of the present disclosure is applied, may largely include an encoding server, a streaming server, a web server, a media storage, a user device, and a multimedia input device.

The encoding server compresses contents input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the contents streaming system may include a separate control server. In this case, the control server serves to control a command/response between devices in the contents streaming system.

The streaming server may receive contents from a media storage and/or an encoding server. For example, when the contents are received from the encoding server, the contents may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the contents streaming system may be operated as a distributed server, in which case data received from each server may be distributed.

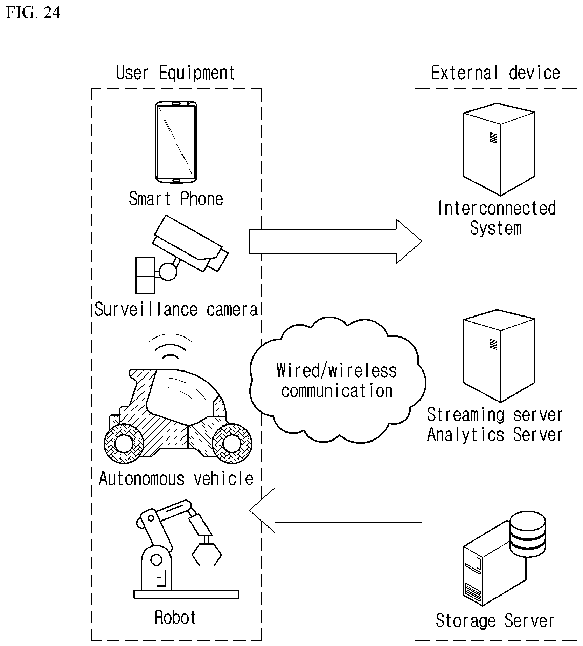

FIG. 24 is a diagram illustrating another example of a content streaming system to which embodiments of the present disclosure are applicable.

Referring to FIG. 24, in an embodiment such as VCM, a task may be performed in a user terminal or a task may be performed in an external device (e.g., streaming server, analysis server, etc.) according to the performance of the device, the user's request, the characteristics of the task to be performed, etc. In this way, in order to transmit information necessary to perform a task to an external device, the user terminal may generate a bitstream including information necessary to perform the task (e.g., information such as task, neural network and/or usage) directly or through an encoding server.

In an embodiment, the analysis server may perform a task requested by the user terminal after decoding the encoded information received from the user terminal (or from the encoding server). At this time, the analysis server may transmit the result obtained through the task performance back to the user terminal or may transmit it to another linked service server (e.g., web server). For example, the analysis server may transmit a result obtained by performing a task of determining a fire to a fire-related server. In this case, the analysis server may include a separate control server. In this case, the control server may serve to control a command/response between each device associated with the analysis server and the server. In addition, the analysis server may request desired information from a web server based on a task to be performed by the user device and the task information that may be performed. When the analysis server requests a desired service from the web server, the web server transmits it to the analysis server, and the analysis server may transmit data to the user terminal. In this case, the control server of the content streaming system may serve to control a command/response between devices in the streaming system.

### Industrial Applicability

The embodiments of the present disclosure may be used to encode or decode a feature/feature map.

## Claims

1. An image decoding method comprising:
obtaining profile tier level (PTL) information of an image; and
determining a profile and a tier of the image based on the PTL information,
wherein the PTL information includes a profile indicator indicating a type of the profile for the image,
wherein the profile type includes a basic profile or an expanded profile, and
wherein the expanded profile includes a neural network (NN)-based profile and a machine analysis-based profile.

2. The image decoding method of claim 1, wherein the expanded profile further includes a human analysis-based profile.

3. The image decoding method of claim 1, wherein a detailed profile indicator for the type of the profile is further obtained based on the profile indicator.

4. The image decoding method of claim 3, wherein the detailed profile indicator includes information on a detailed profile capable of level expansion.

5. The image decoding method of claim 1, wherein expanded level presence information indicating whether a level is expanded is further obtained based on the profile indicator.

6. The image decoding method of claim 5, wherein information on a required resource is further obtained based on the expanded level presence information.

7. The image decoding method of claim 6, wherein the information on the required resource includes at least one or more of a maximum operation amount, a maximum memory, or additional resource presence information.

8. The image decoding method of claim 7, wherein additional resource information is further obtained based on the additional resource presence information.

9. An image encoding method comprising:
determining profile tier level (PTL) information of an image; and
encoding the PTL as PTL information of the image,
wherein the PTL information includes a profile indicator indicating a type of the profile for the image,
wherein the profile type includes a basic profile or an expanded profile, and
wherein the expanded profile includes a neural network (NN)-based profile and a machine analysis-based profile.

10. The image encoding method of claim 9, wherein the expanded profile further includes a human analysis-based profile.

11. The image encoding method of claim 9, wherein a detailed profile indicator for the type of the profile is further determined based on the profile indicator.

12. The image encoding method of claim 11, further comprising encoding the detailed profile indicator.

13. A computer-readable recording medium storing a bitstream generated by the image encoding method of claim 9.

14. A method for transmitting a bitstream for an image, the method comprising
transmitting the bitstream generated by an image encoding method,
wherein the image encoding method comprises:
determining profile tier level (PTL) information of an image; and
encoding the PTL as PTL information of the image,
wherein the PTL information includes a profile indicator indicating a type of the profile for the image,
wherein the profile type includes a basic profile or an expanded profile, and
wherein the expanded profile includes a neural network (NN)-based profile and a machine analysis-based profile.
